(19) **Europäisches Patentamt / European Patent Office / Office européen des brevets**

(11) **EP 3 888 334 B1**

(12) **EUROPEAN PATENT SPECIFICATION**

(45) Date of publication and mention
of the grant of the patent:
**01.04.2026 Bulletin 2026/14**

(21) Application number: **19889537.7**

(22) Date of filing: **26.11.2019**

(51) International Patent Classification (IPC):
*H04L 9/40* (2022.01)    *H04L 9/32* (2006.01)
*H04L 9/00* (2022.01)    *G06Q 20/38* (2012.01)
*G06Q 20/40* (2012.01)    *G06F 9/50* (2006.01)
*H04L 67/1095* (2022.01)    *H04L 67/1097* (2022.01)

(52) Cooperative Patent Classification (CPC):
**H04L 67/1097; G06Q 20/389; G06Q 20/401;
G06Q 20/403; H04L 9/3239; H04L 9/50;
H04L 63/12; H04L 67/1095;** G06Q 2220/00;
H04L 2209/56

(86) International application number:
**PCT/US2019/063463**

(87) International publication number:
**WO 2020/112914 (04.06.2020 Gazette 2020/23)**

(54) **SYSTEMS AND METHODS FOR DISTRIBUTED RESOURCE ALLOCATION**

SYSTEME UND VERFAHREN ZUR VERTEILTEN RESSOURCENZUWEISUNG

SYSTÈMES ET PROCÉDÉS D'ALLOCATION DISTRIBUÉE DES RESSOURCES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2018 US 201862773692 P**

(43) Date of publication of application:
**06.10.2021 Bulletin 2021/40**

(73) Proprietor: **Cutts, Shaun
Allston, Massachusetts 02134 (US)**

(72) Inventor: **Cutts, Shaun
Allston, Massachusetts 02134 (US)**

(74) Representative: **Seyer & Nobbe Patentanwälte
PartmbB
Mülheimer Straße 210
47057 Duisburg (DE)**

(56) References cited:
**KR-A- 20180 046 930    US-A1- 2015 332 283
US-A1- 2018 101 848    US-A1- 2018 240 114
US-A1- 2018 276 632    US-A1- 2018 285 412
US-A1- 2018 341 930    US-B1- 8 468 134
US-B2- 9 495 435**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to systems and methods for distributed resource allocation. More particularly, the present disclosure relates to distributed computational systems, such as, cryptocurrencies and distributed ledgers, as well as to distributed storage and databases, which are designed to make use of distributed quorum systems. Additionally or alternatively, the present disclosure relates to distributed computer systems, including distributed storage and retrieval, tracking of resources and mechanisms for establishing, adjudicating and/or maintaining consensus and verifying transactions.

BACKGROUND

US 2018/341930 A1 relates to sharded permissioned distributed ledgers.

US 2018/101848 A1 relates to a system for managing a virtual private ledger and distributing workflow of authenticated transactions within a blockchain distributed network.

The subject matter discussed in the background section should not be considered prior art merely because of its mention in the background section. Similarly, a problem mentioned in the background section or associated with the subject matter of the background section should not be considered to have been previously recognized in the prior art. The subject matter in the background section merely represents different approaches, which in and of themselves, may also correspond to claimed embodiments.

Systems of distributed computing nodes, possibly controlled by unrelated agents, may perform actions based on diverse inputs arriving at individual nodes and/or subsets of nodes. For instance, actions may include storing and/or retrieving content, and/or receiving messages from, and/or sending messages to, external systems (e.g., devices, networks, agents and/or interfaces). Examples of distributed systems include, but are not limited to, distributed databases, distributed machine learning systems, cryptocurrency systems, and/or distributed source control systems.

Deciding whether or not to perform certain actions, propagating and recording such decisions, revoking prior decisions and undertaking repair actions may all involve costs, as may the decisions themselves. The costs of wrong decisions can be very high; but perfect decision-making is typically not feasible or very costly. Real-world applications at scale may employ systems that can deal with imperfection, however introduced, and heal themselves.

In some instances, distributed computing systems may include entities (e.g., nodes and/or users) which act and/or fail to act, intentionally and/or unintentionally, in ways that may subvert or potentially subvert intended purposes of the systems. Accordingly, some applications are designed to fulfill their purposes despite such users or nodes.

An application which depends on a central service and/or a service controlled by one entity may not be trustworthy because users may not have the same motivations and incentives as a provider of that centralized service. For instance, for providers of search and social media services such as Google and Facebook, the pursuit of advertising revenue and compliance with the dictates of governments worldwide may create an incentive to utilize user data for purposes other than those that users would desire. Other applications, such as the provision of virtual currencies, may also depend deleteriously on the actions of central entities for various purposes.

On the other hand, applications provided as "peer-to-peer" services, wherein the operation of the application is distributed among computing nodes controlled by many different entities, may face a problem that some individual node operators of a service may have motives not compatible with the purpose of the service, and may act in a way to make the service untrustworthy to others. For instance, in the Napster and Gnutella networks, which were meant to support peer-to-peer file-sharing, many "free-rider" nodes simply downloaded files from peers without hosting any themselves [FC2005]. In order to avoid subversion by untrustworthy nodes, some distributed systems may introduce other forms of centralization which impair other capabilities of the system, such as their ability to scale. For instance, nodes in cryptocurrency networks such as Bitcoin store and maintain a copy of the entire transaction history, so that the transaction rate cannot be increased by processing in parallel. In other contexts, free-riding behavior may result from limited information and/or computational resources at distributed nodes. For instance, in a distributed machine-learning application, individual nodes may train patterns incompletely due to resource constraints and/or due to limited data availability. The resulting models may exhibit "free-riding" behavior by purporting to predict for dependent variables, while the predictions may not be generalizable to unseen data.

Cryptographic currency implementations track transactions of a synthetic financial resource among account owners. Computing nodes participating in verifying and recording transactions may be controlled by unrelated parties. Cryptocurrencies accept only cryptographically signed transaction requests, which can only feasibly be produced by a party in possession of a given private key, and which are valid only if the amount of resources in accounts from which resources are to be transferred is above a minimum. Such systems must store transactions immutably, and properly account for resources transferred. In this way, account holders may rely on the system both to preserve balances that result from accepted transactions, and not to create resources illegitimately.

The technology of cryptocurrencies has been adopted more widely to track other sorts of transactions. In such contexts systems which implement this technology have been called distributed ledgers. The first cryptocurrency, Bitcoin, relies on transactions stored in cryptographically signed blocks, in which the signature is tied cryptographically to the identity of a previous transaction block (hence "blockchain"). Bitcoin is a "proof of work" currency: nodes attempting to add a new block to the chain must complete a cryptographic puzzle which requires significant computing resources. The result of this work is cryptographically encoded into the transaction block which they publish, linked to a previous block. The resource investment in publishing the block is lost if their block is not incorporated in the chain. If it is incorporated, however, accounts associated with publishing nodes gain a reward. As the integrity of the data in the block can be checked by other nodes, their node will only have a chance to be chosen by others if it faithfully records transactions. Also, nodes will tend to chose previous blocks that are at the ends of the longest chains, as then their nodes will be at the end of an even longer chain, themselves having more chance of being selected. These two factors together ensure that it is in the common interest of the nodes to build a linear chain of transaction blocks that faithfully reflects the actions expressed in the cryptographically signed directives of account holders.

Distributed ledgers are called "permissionless", if they are designed, like Bitcoin, to ensure the integrity of the transaction record even if a significant majority of nodes tries to corrupt the system. (In the literature, procedures which are designed to function in the presence of parts operated by parties malicious to the intent of the overall system are known as "Byzantine" procedures, named after the "Byzantine generals problem" [LSP1982] of coming to consensus on a plan by passing messages between parties, some of which are trying to sabotage the process; in the following, we will use "Byzantine" occasionally in this sense.)

Permissionless systems function by providing a protocol with carefully designed incentives and cryptographic procedures to ensure that actions have been taken and data has not been tampered with. Counterparties can transact without having to trust each other individual record keepers. However, scaling permissionless systems to high transaction rates has proved challenging, leading to the introduction of "permissioned" systems, which rely on some centralized or consortium authority to mitigate the ability of arbitrary, possibly malicious nodes to disrupt the system. Permissioned systems, however, rely on the trust of participants in the provider of authority, compromising the intended purpose of distributed ledgers.

All permissionless systems currently known to be secure are variants of replicated, rather than truly distributed systems, Each node has to maintain a copy of the transaction history, or a significant portion of it, in order to ensure that a given proposed transaction is valid, and each new block must be a piece of a single linear chain.

Permissioned systems that rely on proof of work computations take significant resources. As only one of several proposed alternate transaction blocks is selected as the next block, much computation is wasted. The latter problem is addressed by "proof of stake" systems, in which, instead of investing in the solution of a computational problem, nodes proposing a transaction must show they have significant stake in the financial resource - which they stand to lose if they propose defective blocks. The former problem, that the system cannot process and/or store transactions in parallel, is serious. It limits the transaction rate of systems, making it very difficult to scale to the needs of many practical applications. Several solutions, involving "shards" or "side-chains" have been proposed. However, these solutions are inadequate. They involve splitting the transaction history into part, while still attempting, in other respects, to maintain the linear nature of the blockchain. If the parts are too small, they do not enjoy the protection of community consensus; if they are not small, their introduction does not help very much. Further, sharded systems must also handle transactions between accounts in different shards.

Distributed storage systems include distributed object and/or relational databases as well as other distributed storage systems, such as distributed document stores. (In the following, "records" are anything a distributed storage system may store.) Distributed storage systems aim to reliably store, retrieve and track changes to records and/or other data. Distributed storage systems may in general process transactions of a more general nature than the transactions foreseen in distributed ledgers: transactions may be comprised of sets of concurrent changes to the state of the system, including creation, update and/or deletion of records.

The concept of system state consistency in distributed storage systems is also strictly more general for distributed databases than it is for distributed ledgers. For a distributed ledger, two transactions may conflict if they both transfer resources from a given account, such that the account is left below a minimum value. To put it another way, transactions presuppose certain account levels, and may conflict if one, when processed, causes the presupposition of the other to be violated.

In a distributed storage system, two transactions may conflict if the changes introduced by one of the transactions presupposes a state of the system which the other transaction impairs in any respect. For example, one transaction may record the relationship of two records, and the other delete one of the records. Transaction conflicts are usually resolved by ordering the transactions with respect to each other. The subsequent transaction must operate on the state in which the previous transaction leaves the store; the subsequent transaction is rejected if its presuppositions conflict with that state.

Ordering transactions in a distributed system, however, is inherently expensive, as participating nodes must coordinate their decisions over imperfect networks which introduce their own time-delays and uncertainties. The introduction of malicious nodes compounds the difficulties.

Distributed storage systems have not until recently been designed to function reliably in the presence of malicious nodes. However, the ability of such systems to scale transaction rates through adding additional distributed computing nodes has been extensively investigated. In particular, non-malicious node failures, and network failures resulting in the partition of the system into pieces, have been studied.

One result of these investigations is the so-called "CAP theorem:" a distributed storage system may not satisfy transaction consistency, availability (the ability to commit to new transactions), and partition tolerance simultaneously. Recent research in distributed storage has sought to scale transaction rates while cognizant of the constraints imposed by the CAP theorem and related work. For instance, causally consistent databases introduce fine-grained analysis of which operations on records may conflict, and propose systems that only require ordering of transactions which conflict under these constraints, while allowing causally unrelated transactions to be recorded without deciding on a mutual order.

It is apparent that distributed ledgers are a type of distributed storage system. Distributed ledger designs initially dealt with conflicts by linearizing all the transactions into the chain. Variants such as side-chains or shards linearize transactions within sub-chains, and offer additional inter-chain resolution mechanisms for transactions between sub-chain boundaries. Other variants have been proposed, but none so far have been able to scale while still maintaining the full requirement that the system function reliably even with a significant fraction of malicious nodes. Indeed, permissioned distributed ledgers retreat from fully supporting this latter goal.

Advances in scaling distributed storage have often resulted in analyzing interactions between transactions or the failure modes of systems in order to minimize the number of nodes involved and minimize the amount and complexity of messaging between those nodes. The potential presence of malicious nodes requires more nodes to be involved, which handicap many schemes which could be used in non-Byzantine settings.

Some embodiments may make use of various cryptographic protocols, such as distributed consensus and/or signing protocols, such as exemplified in [US6463532B1, KG2009].

SUMMARY

The objective technical problem is solved by the subject-matter of the independent claim. Refinements and further developments are defined by the respective dependent claims.

Some aspects of the present disclosure are related to a computing device of a resource allocation system. The computing device comprises at least one processor and at least one non-transient, computer-readable storage medium having encoded thereon instructions which, when executed by the at least one processor, program the at least one processor to determine if a proposed transaction is valid or impaired by lack of resource, at least in part by selecting, probabilistically, one or more previous transactions from a transaction history recorded in a resource allocation system.

In some embodiments, the computing device, on determination that the proposed transaction is not impaired, is additionally programmed to record the proposed transaction in the resource allocation system to indicate that the proposed transaction has been accepted.

In some embodiments, the storage medium of the computing device further encodes at least a portion of a distributed ledger with records of transactions in the resource allocation system.

In some embodiments, the computing device is configured as follows: each of the one or more previous transactions has associated therewith a transaction amount from each of one or more source accounts, the one or more source accounts, and balances of the source accounts, and

determining whether the one or more previous transactions is valid comprises for each previous transaction checking, for each source account, that the balance of the source account was sufficient to support an outgoing transfer of the transaction amount for said source account.

In some embodiments, in the resource allocation system associated with the computing device, the resource is a selected type of resource used in the proposed transaction, and the proposed transaction, in part, comprises a transfer of an amount of a selected type of resource out of one or more source accounts; and the one or more previous transactions are selected from a plurality of previous transactions that are traceable from the one or more source accounts.

In some embodiments, in the resource allocation system associated with the computing device, the resource is a selected type of resource used in the proposed transaction, and the proposed transaction, in part, comprises a transfer of an amount of a selected type of resource out of one or more source accounts; and a second transaction from a transaction history recorded in the resource allocation system is selected that is traceable from the one or more source accounts transfers a second amount of the selected type of resource into a source account.

In some embodiments, in the resource allocation system associated with the computing device, the resource is a selected type of resource used in the proposed transaction, and the proposed transaction, in part, comprises a transfer of a first amount of the selected type of resource out of the one or more first source accounts; and the previous transactions traceable from the one or more first source accounts include both a second transaction that transferred a second amount from one or more second source account, and a third transaction, previous to the second transaction, transferred a third amount of the selected type of resource into the second source account.

In some embodiments, in the resource allocation system associated with the computing device, the resource is a selected type of resource used in the proposed transaction, and the proposed transaction, in part, comprises a transfer of an amount of a selected type of resource out of one or more source accounts; and the one or more previous transactions are selected from a plurality of previous transactions that are traceable from the one or more source accounts; further, the probabilistic selection of the one or more previous transactions is performed by associating, with each of the one or more previous transactions, a respective probability based on an amount of the respective previous transaction relative to a total amount of the one or more previous transactions considered for selection.

In some embodiments, in the resource allocation system associated with the computing device, the resource is a selected type of resource used in the proposed transaction, and the proposed transaction, in part, comprises a transfer of an amount of a selected type of resource out of one or more source accounts; and the one or more previous transactions are selected from a plurality of previous transactions that are traceable from the one or more source accounts; further, the probabilistic selection of the one or more previous transactions is performed by associating, with each of the one or more previous transactions, a respective probability based on an amount that the previous transaction transferred into a target account relative to a total amount that the one or more previous transactions transferred into the target account.

In some embodiments, in the resource allocation system associated with the computing device, the resource is a selected type of resource used in the proposed transaction, and the proposed transaction, in part, comprises a transfer of an amount of a selected type of resource out of one or more source accounts; and the one or more previous transactions are selected from a plurality of previous transactions that are traceable from the one or more source accounts; further, a total amount of checking by selection of the one or more previous transactions is based on a resource budget for checking, and the resource budget is determined based on the amount of the selected type of resource to be transferred in the proposed transaction.

In some embodiments, additionally, the resource budget comprises a plurality of resource units, each resource unit corresponding to an amount of resource used for checking validity of one of the one or more previous transactions.

In some embodiments, additionally, the amount of resource used for checking validity of the one of the one or more previous transactions comprises an amount based on an amount of computational effort.

In some embodiments, additionally, the computational effort is measured based on a number of messages sent between nodes in the resource allocation system.

In some embodiments, in the resource allocation system associated with the computing device, the resource is a selected type of resource used in the proposed transaction, and the proposed transaction, in part, comprises a transfer of an amount of a selected type of resource out of one or more source accounts; and the one or more previous transactions are selected from a plurality of previous transactions that are traceable from the one or more source accounts; further, a total amount of checking by selection of the one or more previous transactions is based on a resource initial budget for checking, whose amount is determined based on the amount of the selected type of resource to be transferred in the proposed transaction, but which is adjusted based on a number of invalid transactions found, a total amount of invalid transactions found, and/or a margin between an amount transferred out by the proposed transaction and an amount available after discounting a total amount traceable to invalid transactions.

In some embodiments, the at least one processor of the computing device may be composed of a plurality of computing nodes which share responsibility for maintaining the plurality of accounts, and the transaction history of the resource allocation system may be recorded in a plurality of transaction history replicas of a plurality of accounts; and the proposed transaction comprises transferring out of at least one source account; and the source account replica nodes constitute one or more computing nodes from the plurality of computing nodes which share responsibility for maintaining the plurality of accounts, which are responsible for maintaining transaction history replicas of the at least one source account; and the source account replica nodes are further programmed to independently select some of the one or more selected previous transactions, and obtain data from source accounts of the one or more selected previous transactions by querying one or more computing nodes responsible for maintaining the source accounts of the one or more selected previous transactions; and at least one of the source account replica nodes independently determines whether the one or more previous transactions selected by the computing node are valid; and determining whether the proposed transaction is impaired comprises forming a quorum of source account replica nodes, wherein a joint result of the quorum is used to determine whether the proposed transaction is impaired.

In some embodiments, additionally, the quorum comprises the quorum of source account replica nodes;

and at least one quorum node is further programmed to memorialize, in a transaction log, a consensus of the quorum with respect to the proposed transaction.

In some embodiments, additionally, the at least one processor additionally comprises a plurality of log nodes; and each node in the quorum has at least one associated log node responsible for collecting a log from the computing node in the quorum.

In some embodiments, additionally, the quorum comprises a first quorum, and the at least one associated log node comprises a plurality of independent log nodes, a second quorum of which forming a consensus that the second quorum have received a transaction record and, in response to forming the consensus, causing the transaction record to be recorded in the transaction log; and wherein the one or more computing nodes responsible for maintaining transaction history replicas of the at least one source account comprise a third quorum which records a consensus as to the proposed transaction only on receiving certifications from each member of the third quorum that log nodes for each member have a corresponding quorum which has formed a consensus to record the transaction record.

In some embodiments, additionally, but potentially independently of the last mentioned embodiment, the at least one associated log node is additionally programmed to respond to queries about the transaction history of the at least one source account, and the querying the one or more computing nodes responsible for maintaining the source accounts means querying either the source account nodes or the associated log nodes.

In some embodiments, the at least one processor of the computing device may be composed of a plurality of computing nodes which share responsibility for maintaining the plurality of accounts, and the transaction history of the resource allocation system may be recorded in a plurality of transaction history replicas of a plurality of accounts; and the proposed transaction comprises transferring out of at least one source account; and the source account replica nodes constitute one or more computing nodes from the plurality of computing nodes which share responsibility for maintaining the plurality of accounts, which are responsible for maintaining transaction history replicas of the at least one source account; and the source account replica nodes are further programmed to independently select some of the one or more selected previous transactions, and obtain data from source accounts of the one or more selected previous transactions by querying one or more computing nodes responsible for maintaining the source accounts of the one or more selected previous transactions; and at least one of the source account replica nodes independently determines whether the one or more previous transactions selected by the computing node are valid; and determining whether the proposed transaction is impaired comprises forming a quorum of source account replica nodes, wherein a joint result of the quorum is used to determine whether the proposed transaction is impaired; further, the at least one processor comprises one or more nodes for collecting logs; and the proposed transaction comprises a transaction that transfers resource to at least one target account; and the plurality of nodes, which share the responsibility for maintaining the plurality of accounts comprises nodes responsible for the at least one target account; and recording the proposed transaction in the resource allocation system comprises communicating the proposed transaction by the nodes responsible for the at least one target account to the one or more nodes for collecting logs.

In some embodiments, additionally, a node for collecting logs is selected based on a correspondence between an address of the node and a function of one or more properties of the at least one source account and the proposed transaction, wherein the one or more properties comprise a source account ID, a transaction number, and/or a time period of the proposed transaction, and wherein the node is queriable at the address to retrieve information stored with respect to the proposed transaction.

In some embodiments, the at least one processor of the computing device is further programmed to: in response to determining that at least one previous transaction of the one or more previous transactions are invalid, modify the transaction history in the resource allocation system at least in part by replacing the at least one previous transaction with one or more substitute transactions.

In some embodiments, additionally, if there are subsets of the at least one past transaction which may be replaced in order that the proposed transaction may no longer be impaired, the system is additionally programmed to replace a subset of the at least one past transaction which contains the smallest possible amount of resource consistent with the repair of the impairment of the proposed transaction.

In some embodiments, additionally, but potentially independently of the last mentioned embodiment, the at least one previous transaction that is determined to be invalid comprises a transfer of a first amount of the selected type of resource out of a first source account; the at least one previous transaction is determined to be invalid in response to determining that a balance of the first source account was deficient by a second amount to support the transfer of the first amount; replacing the at least one previous transaction with one or more substitute transactions comprises reducing the first amount transferred from the first source account by the second amount, and adding one or more other source accounts among which the second amount is apportioned.

In some embodiments, additionally, the resource allocation system is maintained by a plurality of nodes; and the other one or more source accounts comprise at least one source account associated with a node that, acting as a replica for the first source account, accepted the at least one previous transaction that is determined to be invalid.

In some embodiments, additionally, but potentially independently of the last mentioned possibility for embodiment, the resource allocation system is maintained by a plurality of nodes; the one or more other source accounts comprise one or more source accounts associated with a node that processed the at least one previous transaction that is determined to be invalid, and which are collectively responsible for a third amount, which is a portion of the second amount which constitutes a maximum amount supported by balances of the one or more other source accounts; a difference between the second amount and the third amount is distributed among, and in sum removed from, one or more target accounts of the at least one previous transaction and/or one or more target accounts of subsequent transactions from the first source account; and
the resource allocation system is further programmed to, in response to determining that another previous transaction becomes invalid as a result of repairing the at least one previous transaction, repair the other previous transaction.

In some embodiments, additionally, but potentially independently of the last two mentioned possibilities for embodiment, the resource allocation system is further programmed, such that there are accounts associated with nodes; and nodes, managing each other's accounts reciprocally, are programmed to require that the accounts of other nodes which they manage maintain a minimum amount of resources.

In some embodiments, additionally, but potentially independently of the last three mentioned possibilities for embodiment, the transaction history comprises a plurality of transaction history replicas of a plurality of accounts; and the at least one processor comprises a plurality of computing nodes which share responsibility for maintaining the plurality of accounts; and the first source account replica nodes constitute one or more computing nodes from the plurality of computing nodes which share responsibility for maintaining the plurality of accounts, which are responsible for maintaining transaction history replicas of the at least one source account; and the one or more other source accounts comprise second source accounts associated with first source account replica nodes that accepted the at least one previous transaction that is determined to be invalid; and the second amount is divided into a covered amount which is the total amount not more than the second amount supported by balances of the second source accounts, and a residual amount, which is any remainder once the covered amount has been deducted from the second amount; and the second source account replica nodes constitute one or more computing nodes from the plurality of computing nodes which share responsibility for maintaining the plurality of accounts, which are responsible for maintaining transaction history replicas of the second source accounts; and the third source accounts comprise accounts associated with the second source account replica nodes; and the resource allocation system is further programmed so that the residual amount is apportioned among the third source accounts.

In some embodiments, additionally, the second source account replica nodes comprise the first level of chained replica nodes; and the chained replica nodes of level greater than one constitute nodes who are responsible for maintain account replicas of chained replica nodes of the preceding level; and the system is further programmed to apportion accounts of the chained replica nodes of a given level any residual amount not covered in the preceding level.

In some embodiments, additionally, but potentially independently of the last two mentioned possibilities for embodiment, the portion of the residual amount apportioned to each of the third accounts is bounded by the lesser of the maximum available in the account and a fixed amount.

In some embodiments, additionally, but potentially independently of the last three mentioned possibilities for embodiment, nodes which manage account history replicas comprise first replica nodes; and the accounts of first replica nodes comprise first replica node accounts; and the nodes which manage account history replicas of first replica node accounts comprise second replica nodes; and the resource allocation system is further programmed so that first replica nodes periodically ask for permission from second replica nodes to process transactions on the accounts whose history the first replica nodes manage, and may not process further transactions until permission is granted.

In some embodiments, the computing device is additionally programmed such that the periodically ask for permission comprises asking permission to process transactions which transfer up to a maximum of a certain total amount of resources.

In some embodiments, additionally, but potentially independently of the last mentioned possibility for embodiment, the permission granted by the second replica nodes constitutes one or more authorization tokens to process transactions; and the computing device is additionally programmed to record a reference to an authorization token as part of the record of an accepted transaction.

In some embodiments, additionally, but potentially independently of the last two mentioned possibilities for embodiment, the second source account replica nodes comprise the first level of chained replica nodes; and the chained replica nodes of level greater than one constitute nodes who are responsible for maintain account replicas of chained replica nodes of the preceding level; and the system is further programmed so that, up to some level, chained replica nodes of previous levels periodically ask permission from nodes of subsequent levels to grant permission to lower levels.

In some embodiments, additionally, the permission asked on the first level constitute a permission to process transactions which transfer up to a certain total amount of resources, and the permission at subsequent levels constitute a permission to grant permissions to the next preceding level authorizing transactions which transfer up to a certain total amount of resources.

In some embodiments, additionally, but potentially independently of the last four mentioned possibilities for embodiment, the permission to process transactions functions as a type of resource managed by the resource allocation system.

In some embodiments, but potentially independently of the last five mentioned possibilities for embodiment, the permission to process transactions constitutes a type of resource managed by the resource allocation system.

In some embodiments, a processor of the one or more processors of the computing device is additionally programmed to determine whether any of several proposed transactions are impaired, by following the procedure of the resource allocation system of claim 1, but using information retrieved by this process to determine whether any of the proposed transactions is impaired.

In some embodiments, additionally, the several proposed transactions comprise transactions that are to a same target account or from a same source account, and information gained from random examination of source history is used to adjust a total amount of a selected type of resource deemed to have been transferred collectively by the transactions.

In some embodiments, in the resource allocation system associated with the computing device, a transaction has associated therewith one or more source data records which individually or severally have associated one or more source accounts which track some resource associated with the data records or is able to be calculated by the state of the data records, and one or more amounts corresponding, respectively, to the amounts of resource attributable to the data records in the one or more source accounts, and determining whether a transaction is valid comprises checking, for each source account, that the amounts of resource tracked by the source account was sufficient to support an operation on the data objects which modified the amounts of the tracked resources.

In some embodiments, additionally, one of the one or more processors of the computing device is programmed to find the subset to replace by an approximation algorithm to the knapsack problem.

In some embodiments, a computing device comprising: at least one processor; and at least one non-transient, computer-readable storage medium having encoded thereon instructions which, when executed by the at least one processor, program the at least one processor to determine if previous transactions are invalid because of lack of resource, at least in part by: selecting, probabilistically, one or more previous transactions from a transaction history recorded in a resource allocation system; determining whether the one or more previous transactions are valid.

In some embodiments, additionally, the computing device is programmed to execute the program periodically.

In some embodiments, additionally, but potentially independently of the last-mentioned possibility for embodiment, the computing device is programmed so the program selects for verification accounts which have not been verified recently.

In some embodiments, a computing device of a resource allocation system, the computing device comprising: at least one processor; and at least one non-transient, computer-readable storage medium having encoded thereon instructions which, when executed by the at least one processor, program the at least one processor to allow the determination if a proposed transaction is impaired by lack of resource, at least in part by: responding to a query on transaction history by returning transaction records relevant to the query including a cryptographic certification of their previous acceptance and their place in a chain of transactions.

In some embodiments, the invention comprises a method performed by the computing device in any of the embodiments summarized above.

The foregoing is a non-limiting summary of the invention, which is defined by the attached claims.

BRIEF DESCRIPTION OF THE DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:

FIG. 1 is a diagram showing the relation between proposed transaction, accounts, and previous transactions, according to some embodiments;
FIG. 2 shows a system and illustrates storage of account history replicas, according to some embodiments;
FIG. 3 shows a system and illustrates the relation between replica nodes and log nodes, according to some embodiments;
FIG. 4 shows a diagram showing repair of an invalid transaction, according to some embodiments;
FIG. 5 shows a diagram showing chaining of responsibility for invalid transactions, according to some embodiments; and
FIG. 6 is a block diagram of the system according to some embodiments.

DETAILED DESCRIPTION

1. Distributed Ledgers and Resource Allocation Systems

In some embodiments, a resource allocation system ("RAS") may keep track of some valuable resource over time, while responding to orders from a plurality of parties to move, create, destroy or transform some or all of some type(s) of resource. In some embodiments, a RAS may use a distributed ledger to keep track of one or more types of resource. However, it should be appreciated that aspects of the present disclosure are not limited to using distributed ledgers, as discussed in the background, to keep track of a financial resource, and are not limited to distributed systems. The inventor has recognized and appreciated that resource allocation systems are not limited to financial resources, and thus may address other types of resources. Any one or more type of resource may be tracked. For instance, provision and/or consumption of electric power at given time periods may be tracked by a system, which may ensure an adequate allocation of electricity flows between producers and consumers. Alternatively, or additionally, for instance, one or more capacities of a computer network, such as computing, storage or messaging capacity, may be tracked, and may be allocated among computational tasks which consume such resource. Some embodiments of resource allocation systems may track types of resource created for the purpose of measuring and/or improving the function of some larger computing system, such as, for instance, systems of awards or penalties for nodes or system users as their actions are judged to cooperate or impede the functioning of the overall system. Some embodiments of a resource allocation system may track a resource implicitly as a cost or value function associated with some larger system: for instance, the number of nodes or other resources used by the system, and/or used by/attributable to parts of the system.

Some embodiments of the present invention can be seen as the application of the distributed-storage notion of eventual consistency [BG2013] to distributed ledgers or resource allocation system, while taking advantage of the specialized nature of resource allocation to improve on its usefulness.

In some embodiments, resource may be moved between accounts. An account may be identified in any suitable manner, for example, based on a network location, a cryptographic key, or another mechanism for account identification. An amount and type of resource held in an account may be represented in any suitable manner. For instance, an amount of resource may be represented directly (e.g., using numerical values, or, for different types, an associative map of type identifier to numerical value). Additionally, or alternatively, an amount of resource may be represented indirectly (e.g., based on a probability of the amount of resource being present, or based on evidence of a presence or absence of the amount of resource). It should be appreciated that aspects of the present disclosure are not limited to representing amounts numerically. Any system is a resource allocation system independent of the specific representations of resources - which are termed here amounts, but can contain arbitrary information - as long as they can be combined and compared, such that: (i) if a first amount may be accounted not less than a second amount, and the second amount may be accounted not less than a third amount, then the first amount may be accounted not less than the third amount; and (ii) if a first amount may be accounted not less than a second amount, and a third amount may be accounted not less than a forth amount, then a sum of the first and third amount may be accounted to be not less than a sum of the second and forth amount.

For example, a resource allocation system may record the permission to use a resource which is imperfectly transferrable. For instance, a peer-to-peer car sharing service may foresee the responsibility of users to maintain a car during the time they are allowed to use the vehicle. If they transfer some or all of the time to other users, some additional uncertainty may accrue as to the state of resource as it is transferred. Hence the representation of the permission to use includes the identifier for the underlying resource together with a string of names of previous holders, and the act of combining a set of previously held permissions with a set of newly transferred permissions may involve accounting for a slight degradation of the value of the incoming permissions by a representation of the uncertainty accumulated during the transfers. Comparison and combination still accord to the stipulations expressed above.

In some embodiments of a RAS, a resource may not be transferrable between different parts of the system. For instance, the "accounts" may simply be data objects, and the resource the size or the importance of the objects. In such cases, it may not be possible to transfer resources from one account to another. Such systems still embody a RAS if transactions are subject to some consistency constraint with respect to the resource. For instance, if objects have importance, a system such as an object cache may constrain transactions so as to never decrease the sum importance of objects. Many computational systems, even if they are not RASes overall, nevertheless contain them as critical components. In the description below, in cases where the resource is a computed attribute of some object or part of the system, "account" may mean the object and/or part, from which the value of the resource can be calculated (The resource value may, but need not be explicitly stored.) An account transaction history in such cases may be the history of transactions that modify and/or involve that object and/or part, from which the value and/or changes in the value of the resource may be calculated, whether or not it is explicitly stored.

It should be appreciated that aspects of the present disclosure apply not only to systems in which resource allocation is a central purpose, but to those in which resource allocation, or the allocation of quantities and/or tokens whose value may be assigned by convention, serves as a book keeping device in the service of some other goal. For instance, in some embodiments the purpose of the system may be the storage and maintenance of arbitrary data. For instance, a database system may use a resource and/or resource-like entity and/or measure to govern the amount of verification done on a particular transaction and/or by a particular node in the system.

2. Probabilistic Transaction Verification in RAS

Some RASes, linearize all actions in order to avoid inconsistent behavior. Some RAS implementations attempt to ameliorate scalability problem by sharding data and using a divide and conquer strategy of linearizing within and then among shards. The inventor has recognized and appreciated that ensuring consistency by linearizing all transactions in resource allocation systems may create a bottleneck to scalability, and that sharding is of limited effectiveness at overcoming such a bottleneck. Nevertheless, the inventor has recognized and appreciated that it may be desirable to provide a RAS with a mechanism for identifying and eliminating inconsistent transactions (for instance, if the transactions reduce an account balance to below a selected threshold). Accordingly, in some embodiments, techniques are provided that maintain a partial order among transactions, and verify, possibly partially or probabilistically, that a given new transaction which transfers resource between two or more accounts is consistent by checking previous transactions from source accounts. In some embodiments the verification check uses a probabilistic probe of previous transactions. It should be appreciated that the notion of previous in a RAS may but need not refer to clock time, but may mean previous in terms of effective order of operations at one or more of the computing nodes involved in the RAS. In cases where the order of some given operations is unknown or not specified, previous may mean "not following" in terms of the order induced, possibly transitively, by any other operations whose order is known and whose order or simultaneity with regard to the given operations is known, specified and/or postulated.

In some embodiments, the amount of resource in an account is determined by the transaction history of properly formed (for instance, cryptographically signed) transactions to and from the account recorded in the transaction history of the account, possibly augmented by an initial balance. In some embodiments, a transaction which has been recorded properly as determined by the rules of the particular embodiment may be termed accepted. In some embodiments, a valid transaction may be one in which the amount of resources in source accounts is enough so that the amount of resources in any of the source accounts does not fall under the minimum amount for those source accounts. In some embodiments, an invalid transaction may be a transaction that is not valid. In some embodiments, an impaired transaction may be a transaction in which the amounts in source accounts are such that the transaction should be valid, but for which the transitive closure of the transactions upon which the amounts in the source accounts depend includes an invalid transaction.

In some embodiments, given a proposed transaction, $Tp$, the system may choose at random from among all of the previous transactions, and verify that that the account(s) from which that transaction transfer resource had sufficient amount of appropriate resource type to do so. If it does not, then the system has discovered that it is in an inconsistent state, and may undertake various of several actions discussed below, such as, for instance repair, and/or putting the current and/or other transactions on hold. Whatever variant is chosen, if the random choice is made uniformly, then a given previous transaction is checked with probability $1/d$ when there are d total previous transactions in the system, and therefore is checked unboundedly often with a probability approaching certainty as the number of previous transactions continues to grow. This property, or a similar one, is preserved, or preserved under some conditions, by many of the variants discussed below.

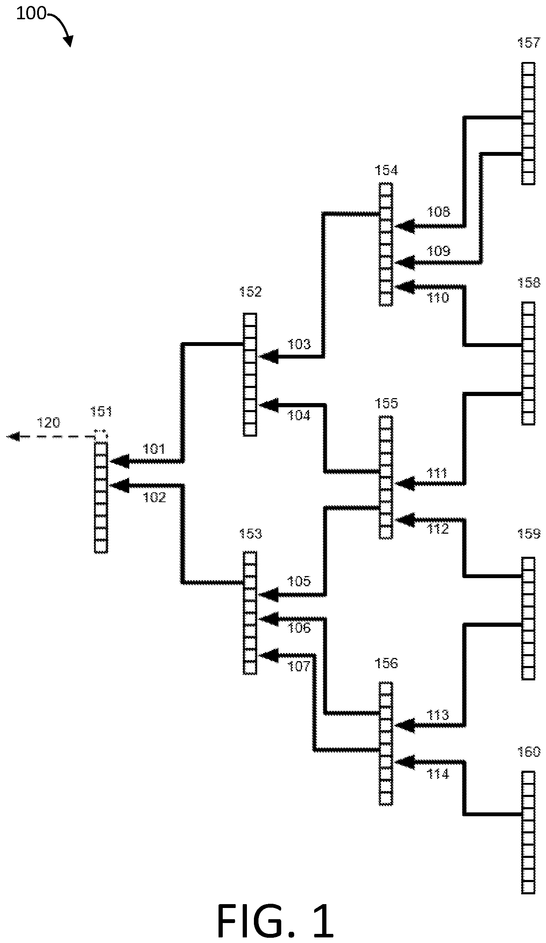

In some embodiments, the previous transactions checked may be related to the proposed transaction. FIG. 1 shows a diagram 100 of example of previous transactions 101, 102, 103, ... 114 between accounts 151, 152, ... 160, as well as a proposed transaction 120. The system may maintain a local transaction history for each account. The local transaction history may include all incoming and outgoing transactions pertaining to the account, and the transactions may be linearly ordered (e.g., based on the order in which they were accepted). In some embodiments, however, the local transaction history may not be linear. Rather, in some embodiments, the system may accept a set of transactions for a given account if there exists some order for which no outgoing transaction causes the account's balance to fall below some selected threshold. For instance, if, while considering and/or within a certain period after considering a given transaction which would in isolation reduce the balance of an account to below a given threshold, another transaction is presented such that the balance of the account, when the two transactions are taken together, is maintained at the level equal to or above the threshold, then the set of transactions may be deemed valid regardless of the order that the transactions were presented.

In some embodiments, to verify that a proposed transaction from an account is not impaired, given the apparent account balance, which, in turn, depends on the amounts, types and validity of incoming and outgoing transactions, the system checks probabilistically among incoming transactions the account. For instance, with reference to proposed transaction 120 from account 151 in diagram 100, they system might decide to check either or both of previous transactions 101 and 102 with a given probability, and conditioned on the choice of transaction 101, it may go on to choose which of transactions 103, 104 to check, possibly then checking one or both of transactions 111, 112 as a result.

In some embodiments, given a transaction $Ti$ with a source account $Aj,$ the system may check whether *Aj* held a sufficient amount of resource when *Ti* was proposed. For instance, *Ti* may be considered invalid if a balance of all incoming and outgoing transactions in the transaction history of *Aj,* up to a point at which *Ti* was proposed, was insufficient to support *Ti* (e.g., *Ti* caused *Aj* s balance to fall below a selected threshold).

In some embodiments, a transaction *Ti* with source account *Am* may be considered impaired if some of the resources in account *Am* deemed to be present before the transaction can be traced backward via a path of transactions ending at *Am* to an invalid transaction *Tj.*

In some embodiments, the system may select one or more incoming transactions of *Aj* at random from all incoming transactions recorded in *Aj* s account history before *Ti,* and check whether these transactions are impaired. In some embodiments, this validity check may involve checking whether a selected incoming transaction *Tk* (with source account *Al*) is invalid. In some embodiments, this validity check may involve recursively checking whether any incoming transaction of *Al* that happened before *Tk* is impaired.

In some embodiments, the system may choose a transaction uniformly at random from all incoming transactions. In this manner, it may ensure that every transaction is checked an expected number of times which grows without bound as the number of transactions in the account grows. In some embodiments, the system may weigh more recent transactions more heavily than less recent transactions. For instance, if there are *n* transactions, the system may choose the kth most recent transaction (k >= 1) with probability

$$\frac{1}{\log(k + 1)} * \frac{n}{\sum \frac{1}{\log(1 + i)}}$$

where the sum is over *i* ranging from 1 to *n.* In such a manner, by choosing a method according to which the sums of the probabilities by which a given transaction is chosen diverge, while also weighting more recent transactions more highly, the system may ensure that (i) a given transaction is checked without bound in expectation as the number of transactions in a given account grows, while also (ii) limiting the growth, as a function of the total number of transactions in an account, in the lag before which a given transaction is checked a given number of times.

In some embodiments, the system nodes may probabilistically check all transactions and/or all accounts which they are aware of. They may perform these checks at a given rate, in response to new transactions and/or in the background - for instance, during periods of lower system activity. In some embodiments, the system may weigh the choice of transaction by the size of the transaction.

On discovery of an impaired transaction, various actions may be taken. In some embodiments, for instance, the impaired transaction may be put on hold while other actions are taken. In some embodiments, additional random checks on source accounts may be performed when a transaction is found to be impaired. In this manner, the total amount of resource actually present, after removing any amounts purportedly transferred without resources having been available, may be estimated, and the transaction may be marked as invalid if it is estimated that sufficient resources are not available for it because of impairment. Further actions may be based on probabilities or other quantities calculated during this estimation procedure. In some embodiments, repair of the invalid transaction (discussed below) may allow the impairment to be removed. In some embodiments, when an invalid transaction is found in the history of a given proposed transaction, repair and additional random checks may be conducted in parallel, with the proposed transaction proceeding when it has reached a threshold of certainty that it is not invalid, either by repair or by additional checks on other transactions, while repair of invalid transactions discovered can proceed asynchronously even after the main transaction is cleared.

3. Replication

In some embodiments, responsibility for record storage and acceptance of transactions for accounts may be distributed among different computing nodes, which may replicate some or all the data. In the following, a replica node is a node that stores a replica of certain data, such as data that comprises an account record. The copy of the data itself will be denoted as replica data - for example a replica account. A replica node together with the replica account data is known simply as a replica. In some embodiments, each account may have associated therewith one or more replica nodes that maintain a transaction history for the account. In this manner, the system may continue to function even if one or several nodes fail, and the actions of faulty or malicious nodes may be overcome. It should be appreciated that a given computing node may serve as the replica node for possibly many different accounts; when speaking of a replica node for an account, we regard the node in its role as replica node for that account, but do not preclude other functions within the RAS or other system, such as serving to replica data for other accounts, and/or to perform other operations such as, for example, logging.

To accept a transaction, replica nodes may use a system which chooses subset of replica nodes, called a quorum, which is possibly but not necessarily a majority of them, and which is chosen using a consensus protocol to make decisions with regard to data changes, such as approval or rejection of a transaction. The literature contains many possible consensus protocols (e.g., a Byzantine agreement protocol). In some embodiments, a quorum may use a threshold signature or other cryptographic techniques to sign transactions, and/or to prove that one transaction immediately follows its predecessor; for instance, it may use techniques as detailed in [KG2009]. In this manner, any node querying an account's transaction history may be assured that no node has omitted an outgoing transaction or misrepresented an incoming transaction without the collaboration of a quorum of its peers.

In some embodiments, replica nodes, before agreeing to join a quorum for the acceptance of a transaction, may check account histories using independent random choices. In this manner, impaired transactions may be more easily uncovered.

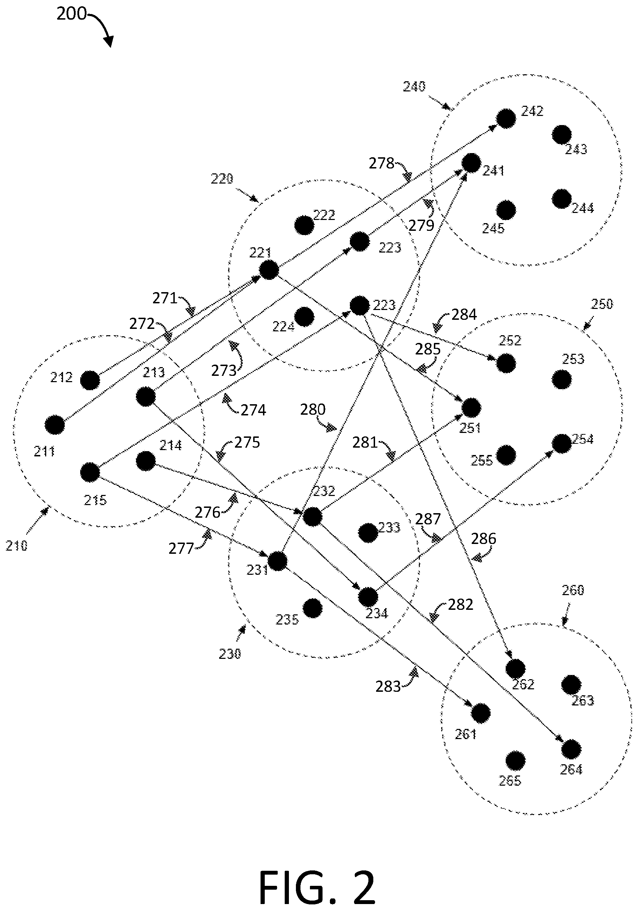

FIG. 2 shows an example system 200, according to some embodiments, having six accounts, namely accounts 210, 220, 230, 240, 250, and 260. Each account has five account replicas with each replica at an identified replica node. Specifically account 210 has a replica at each of nodes 211, 212, 213, 214, and 215; account 220 has replicas at nodes 221, 222, 223, 224, and 225; account 230 has account replicas at replica nodes 231, 232, 233, 234, and 235; account 240 has replicas at nodes 241, 242, 243, 244, and 245; account 250 has replicas at nodes 251, 252, 253, 254, and 255; and account 260 has account replicas at nodes 261, 262, 263, 264, and 265. Arrows 271 - 287 represent the one or more actions that may be performed in response to a proposed transaction from account 210. It should be appreciated that the choice of six accounts with five nodes each is illustrative; there may be any suitable number of accounts and each account may have any suitable number of nodes. Each node, given its local knowledge of a transaction history of an account, independently choses a node controlling replicas of other accounts. For instance, node 213 may have chosen to verify the status of incoming transactions from accounts 220 and 230 with nodes 223 and 234, respectively (see arrows 273 and 275). The chain of verification may then proceed to the verification of transactions from accounts 4 and 5 (arrows 279 and 287).

In some embodiments, verification may be carried out by original nodes (for example, 213 and other replica nodes of account 210) requesting records from account histories maintained by subsequent nodes (e.g., nodes 223 and 234), and performing additional random selections from the retrieved account histories itself. In other embodiments, original nodes may not retrieve account histories, retrieving, for example hashes or samples to ensure integrity, and instead delegate one or more sub-verification steps to nodes that store or have direct access to that history, e.g., node 213 could delegate the checking of transactions of account 220 to a replica node for that account.

In some embodiments, the number of replicas serving each account may be a fixed property of the system. In other embodiments, the number of replicas may vary. For instance, the number of replicas may be chosen or adjusted so as to vary according to, and/or be roughly proportional to a statistic calculated on the resource or change in resources in the account. For instance, it can be chosen so as to be proportional to, and/or to vary according to, the amount of resource in the account, a moving average amount over time, and/or a moving average over time of the amount and/or sum of transaction amounts, and/or other statistic. In some embodiments, the number of replicas serving a given account may depend on other system properties. For instance, the system may adjust it to reflect network connectivity, throughput and/or latency data of replica nodes, and/or some other statistic which reflects the reliability and/or availably of the nodes.

In some embodiments, the number of replicas who participate in a quorum accords with the choice of consensus protocol, as above. In other embodiments, smaller quorums may be able to accept transactions in conditions specified by the system. For instance, if replica nodes themselves commit resource into escrow, the system may allow them to accept small transactions, and/or transactions smaller than the amount of escrow they have set aside, without building a full quorum. If, for instance, the transaction turns out to be impossible because of other conflicting transactions, the system may create a transaction from the escrow, to cover whatever portion of the transaction may be in conflict. In this manner, nodes operators may choose to accept risk when that risk is small and/or when it is manageable in relation to their escrow, in return for a larger share of any transaction fees.

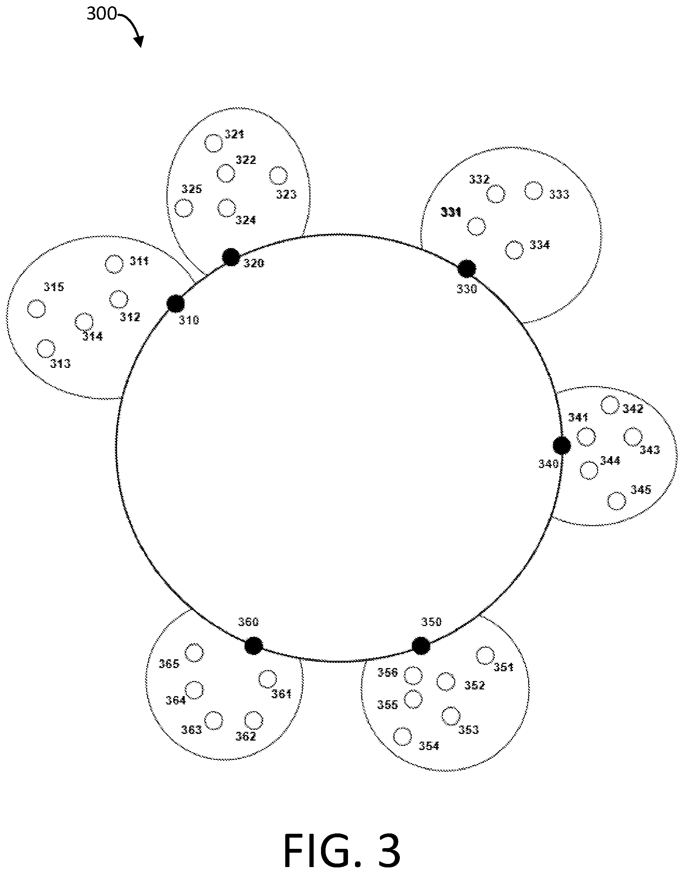

In some embodiments, after a quorum accepts an outgoing transaction, the decision may be recorded by one or more log nodes (discussed more fully below and illustrated in FIG. 3) which do not participate in the quorum. It should be appreciated that a node serving as a log node does not rule out, in general, that the node serve other roles in the system. In some embodiments, the system may designate log nodes in such a way so as to preclude that a log node for a given account will also be a replica node for the same account. In some embodiments, for each source account replica node participating in the decision quorum there may be several nodes designated to serve as log nodes for the decisions of that replica node. Additionally, or alternatively, the decision may be communicated to one or more client computers and/or replicas responsible for one or more target accounts of the transaction. In this manner, digital signatures may ensure that the sequence of previous transactions present when a quorum accepts a give transaction cannot be changed surreptitiously without discovery by anyone with a copy of the signatures. In this manner, the communication of accepted transactions together with such signatures to log nodes may ensure that the number of nodes that must collaborate to omit mention of outgoing transactions so as to subvert the discovery of impaired transactions may be increased.

In some embodiments, one or more nodes that collect logs may be identified by some dynamically changing but easily computable method. In this manner, it may be difficult for a malicious attacker to predict which nodes to subvert, but easy for a verifier to compute afterwards which nodes should be queried to find putative omitted outgoing transactions. For example, one or more nodes may be chosen based on one or more numbers derived from an agreed hashing technique based on a public identifier for an account and a number of incoming transactions, or upon a timestamp or logical view number as chosen by a Byzantine consensus algorithm.

In some embodiments, the number of nodes serving as log nodes for a given transaction may be a fixed property of the system. In other embodiments, the number of log nodes may vary. For instance, the number of log nodes may be chosen or adjusted so as to be roughly proportional to a statistic based on the size of the transaction. In some embodiments, the number of log nodes for a given transaction may depend on other system properties. For instance, the system may adjust it to reflect network connectivity, throughput and/or latency data of log nodes, and/or some other statistic which reflects the reliability and/or availably of the nodes.

In some embodiments, variants or additions to the protocol by which log nodes receive transaction records may be employed. In some embodiments, although the log nodes do not participate in the source account quorum, the formation of a quorum of log nodes and the presentation of a certificate signed by that log quorum by the participant in the source account quorum may serve as an additional condition for the commitment of the source account quorum to the proposed transaction. Additionally, or alternatively, one or more nodes associated with one or more target accounts for the proposed transaction may be responsible for communicating a log record for the transaction with replicas. In this manner, nodes for accounts which have an incentive to preserve a record of the transaction may be responsible for insuring memorialization and searchability of the transaction.

FIG. 3 shows an example system 300, according to some embodiments, with account replica nodes 310, 320, 330, 340, 350, and 360. Account replica node 310 has log nodes 311, 312, 313, 314, and 315; account replica node 320 has log nodes 321, 322, 323, 324, and 325; account replica node 330 has log nodes 331, 332, 333, and 334; account replica node 340 has log nodes 341, 342, 343, 344, and 345; account replica node 350 has log nodes 351, 352, 353, 354, 355, and 356; and account replica node 360 has log nodes 361, 362, 363, 364, and 365. The log nodes log the transactions accepted by the respective account replica node.

4. Transaction weighting

In some embodiments, a verifier may randomly choose, from an account's transaction history, an incoming transaction to verify using other than equal weighting of the transactions. For instance, in some embodiments, an incoming transaction may be chosen from the account history before the verified outgoing transaction with a probability proportional to an amount of resource transferred by the incoming transaction, out of all incoming transactions in the account history. In this manner, the transactions which are most likely to cause invalidation may be most likely to be checked.

In some embodiments, a total verification budget may be split up randomly among the incoming transactions, such that each chosen transaction (e.g., transaction 101 in the example of FIG. 1) is accorded a sub-budget, which may be then split recursively to verify preceding transactions (e.g., transactions 103 and 104 in the example of FIG. 1). In some embodiments, the verification budget may be chosen randomly from a distribution whose mean depends on the size of the transaction.

In some embodiments, the verification budget may be specified in units of the number of transactions checked. Alternately, or additionally, the verification budget units may represent a measure of work performed for the verification, such as, for instance, the number of messages sent, the CPU time spent, and/or the amount of computer memory used.

In some embodiments, a verifier may split up an overall budget between verifying incoming transactions and verifying with replicas and/or log nodes that no outgoing transactions depleting account resources were omitted. In some embodiments, this allocation strategy may also be used recursively.

5. Repair

In some embodiments, when an invalid transaction is found, it may be repaired by adjusting the amount transferred from one or more source accounts and supplementing them with one or more other source accounts. In this manner, source accounts may avoid transferring more than the amount of resource available, while target accounts may receive the same amount of resources. In some embodiments, only invalid transactions, when found, may be replaced. For instance, a source account that did not have a sufficient balance to support the transaction at the time the transaction took place may be supplemented by one or more other accounts which, collectively, do have a sufficient balance. In this manner, account history may be brought back into a consistent state after discovery of an invalid transaction, without unravelling future transactions.

In some embodiments, an account that supplements a source account for an invalid transaction may be an account associated with a node, or an owner of a node, that is responsible for maintaining the source account. In some embodiments, accounts of replica nodes that maintain accounts along a path of outgoing transactions subsequent to the invalid transaction may be made responsible, because such replica nodes had an opportunity to check and discover the invalid transaction. In this manner, responsibility for repair may provide an incentive to properly check a transaction history of an account prior to accepting an outgoing transaction from the account.

In some embodiments, the RAS may require node owners to maintain accounts, and to maintain some minimum amount of resource in these accounts as a condition for the operation of nodes. In this manner, the system may ensure that there are always some resources available for the repair of transactions. In some embodiments, nodes may charge a transaction fee to process transactions. In this manner, the system may ensure that processing transactions may on the average be profitable for node owners, despite the fact that they may be required to repair transactions from time to time.

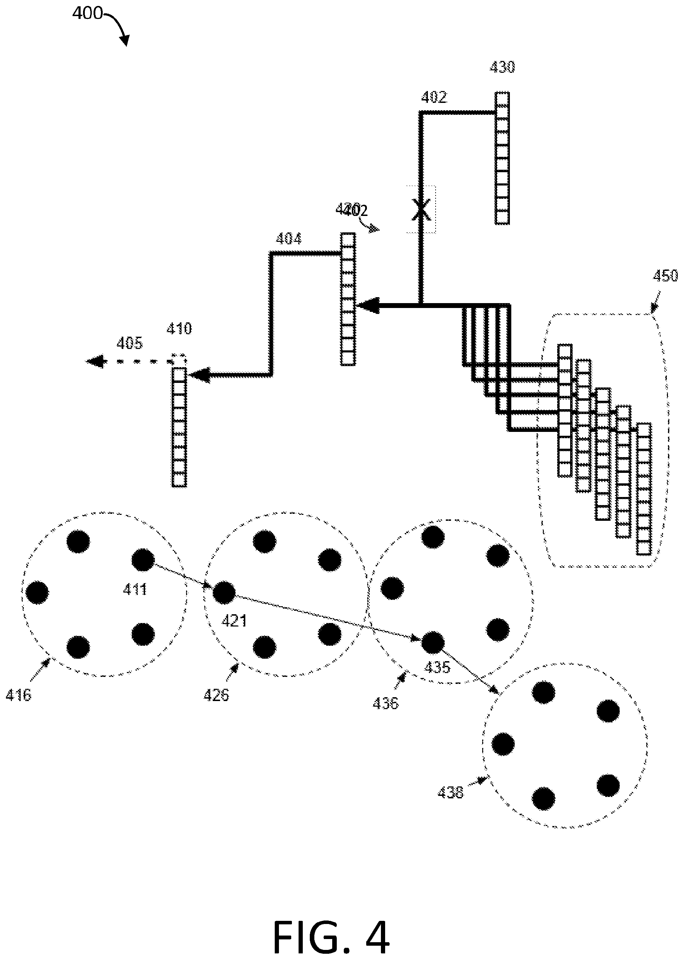

For example, as shown in diagram 400 of FIG. 4, if, by way of verifying proposed transaction 405, replica node 411 finds, by following incoming transaction 404, and checking with replica node 421 of the replica nodes 426 of account 420 and then, following transaction 402, checking replica node 435 of the replica nodes 436 of the account 410, and/or one of the log nodes 438 associated with replica node 435, that the transaction 402 of resources from account 430 to account 420 was invalid, it may initiate a repair process, whereby the accounts 450 associated with the owners of the nodes in the replica groups 426 and 436 provide resources to account 420 to replace any amount illegitimately transferred from account 430, thereby restoring the resources for the impaired transaction 404, and enabling the proposed transaction 405.

In some embodiments, the verification of the transaction history may result in multiple possible invalid transactions, only a subset of which need be invalidated to satisfy consistency constraints. For example, it may be that in account 430 there were two transactions of size X and Y, with X to account 420 and Y to some other account, such that X and Y together exceeded the maximum resources available. In some embodiments, in such cases, the system may choose which of a set of transactions to invalidate according to other criteria. In some embodiments, where there is a set of outgoing transactions whose sum jointly exceeds the limit, a subset to be invalidated may be chosen so as to be as small as possible given the available resources. In some embodiments, where there are several such subsets, one may be chosen at random. In some embodiments, where there are a large number of transactions, a suitable polynomial time approximation scheme to the knapsack problem (such as described in [KU1999]) can be used to choose a subset. In some embodiments, in order to join the system, nodes must put up an assigned amount of escrow. In this manner, the system may be assured that some resources are available for repair.

Embodiments may use various methods to distribute responsibility. For example, in some embodiments, nodes which were originally responsible for accepting an invalid transaction may be jointly responsible up to their full capability to repair the invalid transaction. In some embodiments, any additional responsibility may be divided proportionately among accounts of replicas responsible for all outgoing transactions after the first invalid transaction. In some embodiments, the amount of resources for which a node not directly responsible may be bounded, and responsibility for remaining lacking resources may be propagated forward recursively to accounts of nodes responsible for the replicas of accounts into which resources, from the invalid transaction or subsequent outgoing transactions from the same account, have flowed. In this manner, nodes which may have been simply unlucky, and not malicious, may be limited to a bounded responsibility for any repairs, but will still have an incentive to perform verification checks so as to minimize the likelihood of this possibility. In this manner, if nodes receive a reward for the successful processing of transactions, they may expect that, on the average, transaction processing is advantageous, even though it may incur an occasional unexpected resource cost.

In some embodiments, repair may proceed so as to minimize cost or maximize value with respect to a resource. For example, in cases in which the resource is a computed attribute of underlying objects and/or parts, a repair mechanism which must invalidate a transaction may not be able to substitute for a transaction in its entirety. In such cases, the repair step can invalidate the transaction(s) with the least value and/or greatest cost. For example, if the system tracks parts and their planned inclusion into assemblages, using a resource which is the value of these assemblages, and the system finds that a certain part has been erroneously recorded as included in two disjoint assemblages, the system may choose to invalidate the inclusion which reduces the overall value of the assemblages minimally. In some embodiments, other sorts of resources may be transferred to compensate for any loss that may be incurred. For example, if the system tracks both parts, assemblages and their owners, and keeps accounts with some valuable, transferrable resource associated with owners, it may transfer such transferrable resources from the account of an owner of a part to the account of an owner of an invalidated assemblage in order to compensate for the loss of value associated with the invalidation.

## 6. Responsibility chaining

In addition to, or as an alternative to the above method of distributing responsibility for repair, the system may specify that resources from other accounts should be used for repairs. In some embodiments, if certain immediately responsible accounts belong to the nodes owners of replicas which accepted an invalid account, then the system may make the owners of the replicas keeping the records of the immediately responsible accounts responsible for some or all of any amount which the immediately responsible accounts cannot provide. In some embodiments, this responsibility may extend farther in a like manner to other accounts recursively, with responsibility flowing to levels in a breadth-first manner, which will be transitively jointly responsible for any amount that the previous level did not repair.

In some embodiments, aside from nodes that maliciously accept invalid transactions, nodes in the responsibility chain may have a responsibility bounded per transaction and/or per account for which they are responsible. In this manner, unlucky nodes' expected costs are bounded.

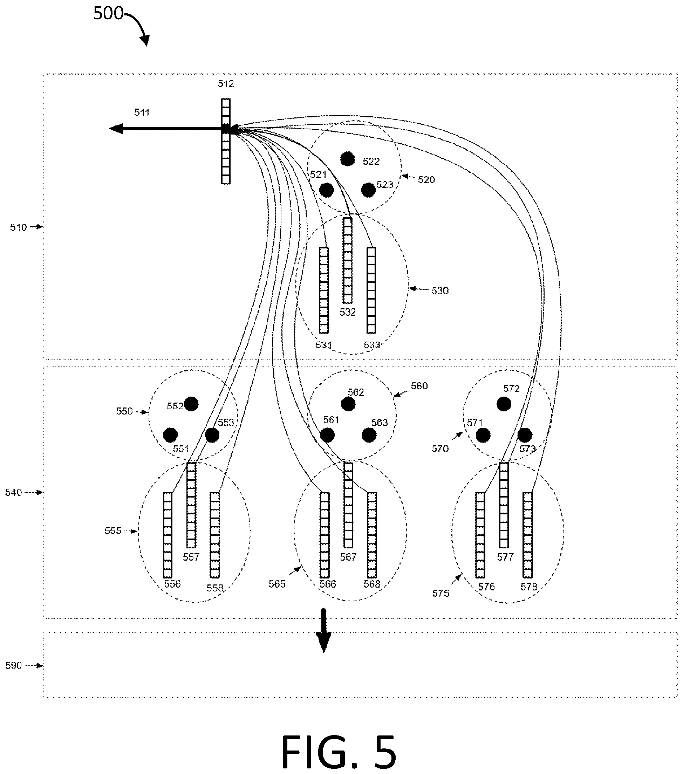

FIG. 5 shows a diagram 500 illustrating responsibility for an invalid transaction in an account 512 according to some embodiments. Account 512 has account replica nodes 520 (consisting of replica nodes 521, 522, and 523). On the first level (level 510) the responsibility for repairing the deficit in account 512 may be with the accounts 530 owned by replica nodes 520 (namely, account 531, account 532, and account 533). As replicas 520 were responsible for verifying the transaction originally, their responsibility may not be bounded and drawn from their accounts 530. However, the ability of accounts 530 to repair the lacking amount and type of resource may be insufficient. Accordingly, in some embodiments, any residual deficit may flow to the second level 540 consisting of the replica nodes 550 (nodes 551, 552, 553) responsible for account 531, replica nodes 560 (nodes 561, 562, 563) responsible for account 532 and replica nodes 570 (nodes 571, 572, 573) responsible for account 533. These accounts may bear a limited liability for repairing any remaining deficit, and any further residual amount may flow to the third level and any subsequent levels 590, containing the replica nodes responsible for maintaining the accounts of the nodes in level 540 (and subsequent levels) in a like manner.

In some embodiments, nodes which process transactions, and whose owners maintain accounts, may periodically request the ability to process more transactions from the replica nodes which manage their accounts, called chained replica nodes. In some environments, the evidence of these permissions may be cryptographic authorization tokens signed by quorum of chained replica nodes for each replica node in a source account that may be used in transaction signatures. In some embodiments, a transaction may not be considered accepted unless the transaction includes a signed reference to a valid authorization token issued by appropriate chained replica nodes. Chained replica nodes in the responsibility chain may grant requests for more tokens, for instance, in return for a given percentage of the transaction fee. In some embodiments, these requests may be used transitively. In this manner, managing accounts for nodes that manage accounts may on balance be advantageous, despite occasionally participating in transaction repair.

In some embodiments, the system may manage authorization tokens from chained replica node quorums as a separate resource, with replica nodes verifying transactions using up authorization tokens from chained replica node quorums as they process transactions for the accounts they replicate. In some embodiments, the amount of authorization tokens required to process a given transaction for the primary resources may be proportionate to the total amount of the primary resource(s), to the of outgoing primary resources and/or the amount of incoming primary resources. In some embodiments, verification of the authorization tokens may be accomplished as part of the overall verification of transactions, whereby the verifier probabilistically choses to verify either the primary resource(s) or the resource of authorization tokens, or both depending on verification budget and/or the details of the probabilistic choice method employed.

In some embodiments, the creation of authorization tokens may be governed by chained replica nodes. In some embodiments, the creation of authorization tokens at a given level in the responsibility chain requires the use of authorization tokens at the next level. In some embodiments, the grant of authorization tokens at any level by quorums of chained replica nodes may depend on both the amount of escrow and the perceived riskiness of transactions processed to chained replica node owners. In this manner the apparent regress of requiring authorization tokens to process transactions from a higher level to process at a lower level need not be an essential impediment to system scaling as the provision of escrow and/or the average validity of transactions may allow a high volume and/or value of transactions to be processed while involving only a limited number of levels of responsibility chaining.

## 7. Batch transactions

In some embodiments, for instance due to transaction processing costs, nodes may be unwilling or unable to process small transactions without compensation which may be larger as a portion of the transaction as the transaction size gets smaller. The inventor has recognized that it is often desirable to process small transactions without prohibitive fees. Accordingly, in some embodiments, groups of transactions may be processed together using random verification. In some embodiments, this may be accomplished by checking the source accounts in the transaction batch as if the batch were one larger transaction. In this manner, any of the previous techniques described above for the verification of may be applied to the whole group of transactions.

In some embodiments, the batch of transactions may represent a joint responsibility: for instance, a responsibility for many small actions taken. Verification may be regarded as the taking of an assay of the batch; the total of this responsibility may be accepted as a whole, or with a penalty, depending on the proportion of invalid and/or impaired transactions as discovered in a sample.

## 8. Maintenance

It should be appreciated that RASes, in some embodiments, may be able to eventually find and correct invalid transactions. However, in some embodiments, the length of period in which the probability that a given invalid transaction is found converges to certainty as a function of the number of subsequent transactions. It may be desirable for this probability to converge independent of the number of subsequent transactions. In some embodiments, the system may periodically verify accounts and/or independent of subsequent transactions. In some embodiments, a transaction or account may be chosen at random for probabilistic verification of its history. In some embodiments, accounts with fewer than a threshold number of transactions may incur a periodic maintenance fee implemented as a transaction with verifying node(s), which as a side effect would trigger verification of history. In some embodiments, the maintenance threshold may be proportional with the assets in the account. In this manner, invalid transactions may be discovered irrespective of subsequent transactions.

9. System Diagram

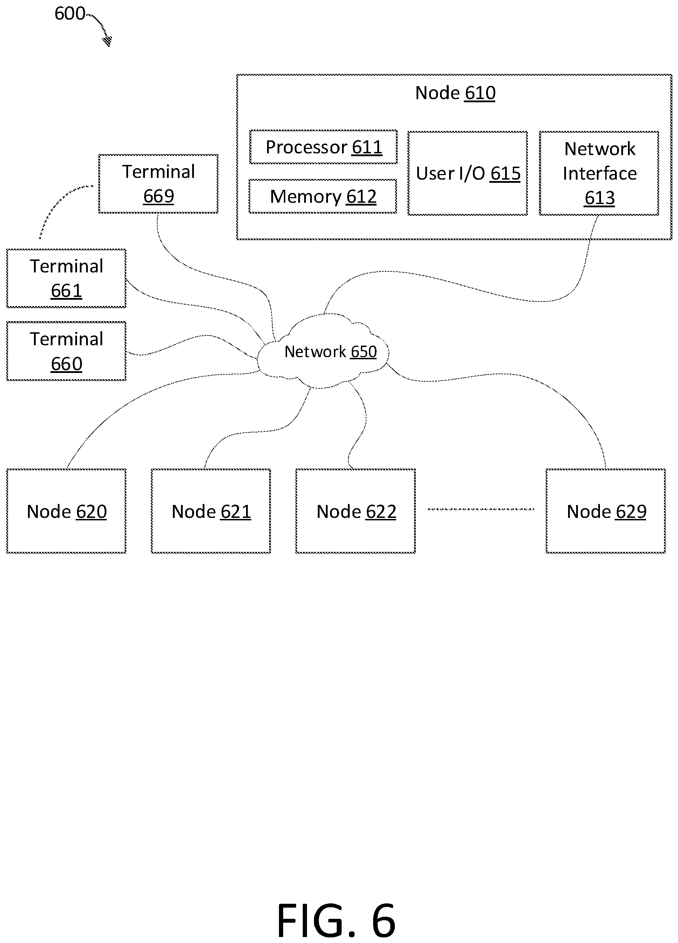

FIG. 6 shows a block diagram of resource allocation system 600 according to some embodiments in which various embodiments may be implemented. RAC 600 includes a plurality of nodes, here shown as nodes 610, 620, 621... 629 connected over a network 650. schematically, an illustrative computer 600 on which any aspect of the present disclosure may be implemented.

A node may be a computing device. In some embodiments, a node may be implemented by several computers, and/or several nodes may be implemented by the action of a single computer. A computing node may have several roles, for instance it may be both an account replica node and a log node; alternately, different roles may be implemented by disjoint computing nodes. Each node may be implemented through a suitable computing device or in any suitable way. In some embodiments, multiple nodes are implemented on the same computing device and may share some computer hardware. In some embodiments one or more nodes may be implemented on virtual machines. In some embodiments the computing device may itself be distributed utilizing hardware resources that are connected over a network or communications bus, or dynamically allocated. Each node need not be implemented in the same way, though a plurality of nodes may have the same or similar implementation. Node 610 according to some embodiments, includes a processor 611, a memory 612, a network interface 613, and user input/output 615.

Processor 611 may be configured to control various aspects of node 610 and may be operatively connected to memory 612. Processor 611 may be any suitable processing device such as for example and not limitation, a central processing unit (CPU), digital signal processor (DSP), controller, addressable controller, general or special purpose microprocessor, microcontroller, addressable microprocessor, programmable processor, programmable controller, dedicated processor, dedicated controller, or any suitable processing device. In some embodiments, processor 611 comprises one or more processors, for example, processor 611 may have multiple cores and/or be comprised of multiple microchips. In various embodiments, processing by processor 611 may be performed sequentially, in parallel, or by some other method or combination of methods.

Memory 612 may be integrated into processor 611 and/or may include "off-chip" memory that may be accessible to processor 611, for example, via a memory bus (not shown). Memory 612 may store computer executable instructions that when executed by processor 611 perform desired functions. Memory 612 may store one or more application programs and/or external components used by application programs (e.g., software libraries), which may be loaded into memory 612. To perform any of the functionality described herein, processor 611 may execute one or more processor-executable instructions stored in memory 612 which may serve as non-transitory computer-readable storage media storing processor-executable instructions for execution by the processor 611.

Memory 612 may be any suitable type of non-transient computer-readable storage medium such as, for example and not limitation, RAM, a nanotechnology-based memory, optical disks, volatile and non-volatile memory devices, magnetic tapes, flash memories, hard disk drive, circuit configurations in Field Programmable Gate Arrays (FPGA), or other semiconductor devices, or other tangible, non-transient computer storage medium.

Network interface 613 may be any suitable combination of hardware and software configured to communicate over a network. The network interface may be configured to receive instructions from other components of node 610 to send and/or receive information of the network using electrical signals. Network interface 613 may have a cabled and/or non-cabled ("wireless") connection to the network.

Node 610 may have one or more input and output devices 615 for interacting with a user (user I/O 615). I/O 615 may be used, among other things, to present a user interface. Examples of output devices that can be used to provide a user interface include printers or display screens for visual presentation of output and speakers or other sound generating devices for audible presentation of output. Examples of input devices that can be used for a user interface include keyboards and pointing devices, such as mice, touch pads, and digitizing tablets. As another example, the input devices may include a microphone for capturing audio signals, and the output devices may include a display screen for visually rendering, and/or a speaker for audibly rendering, recognized text.

Nodes 610-649 may communicate over network 650. Network 650 may be any suitable network such the internet, another private or public network, a wired (e.g., ethernet, fiber optic) network, wireless network, or any suitable combination of networks and network technologies.

In some embodiments, account transactions are initiated from any number of terminals, such as terminals 660-669. Terminals may have suitable computer hardware and software for facilitating such transactions. For example, authentication of an account owner may be required before a transaction can be initialized in RAS 600. In some embodiments, transactions are created by other computing systems performing arbitrary other functions, which may have occasion to use a resource allocation system operating on the same or overlapping computer hardware and/or available via a suitable network interface.

Having thus described several aspects of at least one embodiment, it is to be appreciated that various alterations, modifications, and improvements will readily occur to those skilled in the art. Accordingly, the foregoing description and drawings are by way of example only.

The above-described embodiments of the present disclosure can be implemented in any of numerous ways. For example, the embodiments may be implemented using hardware, software or a combination thereof. When implemented in software, the software code can be executed on any suitable processor or collection of processors, whether provided in a single computer or distributed among multiple computers.

Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine.

In this respect, the concepts disclosed herein may be embodied as a non-transitory computer-readable medium (or multiple computer-readable media) (e.g., a computer memory, one or more floppy discs, compact discs, optical discs, magnetic tapes, flash memories, circuit configurations in Field Programmable Gate Arrays or other semiconductor devices, or other non-transitory, tangible computer storage medium) encoded with one or more programs that, when executed on one or more computers or other processors, perform methods that implement the various embodiments of the present disclosure discussed above. The computer-readable medium or media can be transportable, such that the program or programs stored thereon can be loaded onto one or more different computers or other processors to implement various aspects of the present disclosure as discussed above.

The terms "program" or "software" are used herein to refer to any type of computer code or set of computer-executable instructions that can be employed to program a computer or other processor to implement various aspects of the present disclosure as discussed above. Additionally, it should be appreciated that according to one aspect of this embodiment, one or more computer programs that when executed perform methods of the present disclosure need not reside on a single computer or processor, but may be distributed in a modular fashion amongst a number of different computers or processors to implement various aspects of the present disclosure.

Computer-executable instructions may be in many forms, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments.

Also, data structures may be stored in computer-readable media in any suitable form. For simplicity of illustration, data structures may be shown to have fields that are related through location in the data structure. Such relationships may likewise be achieved by assigning storage for the fields with locations in a computer-readable medium that conveys relationship between the fields. However, any suitable mechanism may be used to establish a relationship between information in fields of a data structure, including through the use of pointers, tags or other mechanisms that establish relationship between data elements.

Various features and aspects of the present disclosure may be used alone, in any combination of two or more, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments.

Also, the concepts disclosed herein may be embodied as a method, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Use of ordinal terms such as "first," "second," "third," etc. in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including," "comprising," "having,", "containing," "involving," and variations thereof herein, is meant to encompass the items listed thereafter and equivalents thereof as well as additional items.

10. Referenced Documents

[AS2007] Awerbuch, Baruch, and Christian Scheideler. "Towards Scalable and Robust Overlay Networks." IPTPS. Vol. 7. 2007. http://citeseerx.ist.psu.edu/viewdoc/download?doi=10.1.1.176.6088&rep=rep1&type=pdf

[BG2013] Bailis, Peter, and Ali Ghodsi. "Eventual consistency today: Limitations, extensions, and beyond." Queue 11.3 (2013): 20, http://www.bailis.org/papers/eventual-queue2013.pdf

[FC2005] Feldman and Chuang, "Overcoming Free-Riding Behavior in Peer-to-Peer Systems," ACM sigecom exchanges 5.4 (2005): 41-50. http://www.sigecom.org/exchanges/volume_5_(04)/5.4-feldman.pdf

[FYS2005] Fiat, Amos, Jared Saia, and Maxwell Young. "Making chord robust to byzantine attacks." European Symposium on Algorithms. Springer, Berlin, Heidelberg, 2005. https://s3.amazonaws.com/academia.edu.documents/32883830/chord.pdf?AWSAccessKeyId= AKIAIWOWYYGZ2Y53UL3A&Expires=1537461008&Signature=-wT9jeMWBS4izqreaGsEG Mv5bbE8%3D&response-content-disposition=inline%3B%20filename%3DMaking_Chord_Robust_to_Byzantine_Attacks.pdf

[KG2009], Kate and Goldberg, Kate, Aniket, and Ian Goldberg. "Distributed key generation for the internet." 2009 29th IEEE International Conference on Distributed Computing Systems. IEEE, 2009. http://citeseerx.ist.psu.edu/viewdoc/download?doi=10.1.1.216.7018&rep=rep1&type=pdf

[KU1999] Kellerer, Hans, and Ulrich Pferschy. "A new fully polynomial time approximation scheme for the knapsack problem." Journal of Combinatorial Optimization 3.1 (1999): 59-71.

[L2010] Lamport, Leslie. "Byzantizing Paxos by refinement." International Symposium on Distributed Computing. Springer, Berlin, Heidelberg, 2011. https://lamport.azurewebsites.net/tla/byzsimple.pdf

[LSP1982] Lamport, Leslie, Robert Shostak, and Marshall Pease. "The Byzantine generals problem." ACM Transactions on Programming Languages and Systems (TOPLAS) 4.3 (1982): 382-401.

[LCP2005] Lua, Eng Keong, et al. "A survey and comparison of peer-to-peer overlay network schemes." IEEE Communications Surveys and tutorials 7.1-4 (2005): 72-93, https://ieeexplore.ieee.org/abstract/document/1610546/

[YKG2013] Young et al, "Towards Practical Communication in Byzantine-Resistant DHTs," http://www.cypherpunks.ca/~iang/pubs/ByzantineDHT_Journal.pdf

Patents:

[M2016] Michali 2016, "Distributed transaction propagation and verification system", US Patent PCT/US2017/031037
[US6463532B1] System and method for effectuating distributed consensus among members of a processor set in a multiprocessor computing system through the use of shared storage resources.
[US20130290249A1] Large distributed database clustering systems and methods
[US20180341930A1] Sharded Permissioned Distributed Ledgers
[WO2019032891A1] Verification of interactions system and method
[US20170264428A1] Data storage system with blockchain technology
[US10135609B2] Managing a database management system using a blockchain database

Claims

1. A computing device of a resource allocation system, the computing device comprising:

   at least one processor; and
   at least one non-transient, computer-readable storage medium having encoded thereon instructions which, when executed by the at least one processor, program the at least one processor to determine if a proposed transaction is impaired by lack of resource, at least in part by:

   selecting, probabilistically, one or more previous transactions from a transaction history recorded in the resource allocation system or selecting with certainty if the transaction history contains only one element;
   determining whether the selected one or more previous transactions are valid, wherein each of the one or more previous transactions has associated therewith a transaction amount of the resource from each of one or more source accounts, the one or more source accounts, and balances of the source accounts, and the determining whether the selected one or more previous transactions is valid comprises for said previous transaction checking, for each source account, that the balance of the source account was sufficient to support an outgoing transfer of the transaction amount of the resource for said source account; and determining whether the proposed transaction is impaired, wherein the proposed transaction is determined to be impaired if it is determined that at least one of the selected one or more previous transactions is invalid,

wherein

if it is determined that the proposed transaction is not impaired, the proposed transaction is recorded in the resource allocation system to indicate that the proposed transaction has been accepted,
wherein the at least one processor is further programmed to:

in response to determining that at least one previous transaction of the one or more previous transactions are invalid, modify the transaction history in the resource allocation system at least in part by replacing the at least one previous transaction with one or more substitute transactions,
wherein the at least one previous transaction that is determined to be invalid comprises a transfer of a first amount of the selected type of resource out of a first source account, the at least one previous transaction is determined to be invalid in response to determining that a balance of the first source account was deficient by a second amount to support the transfer of the first amount, and
replacing the at least one previous transaction with one or more substitute transactions comprises reducing the first amount transferred from the first source account by the second amount, and adding one or more other source accounts among which the second amount is apportioned;
the probabilistic selection is such that every one of the one or more previous transactions is checked with probability that converges on certainty with the continued operation of the resource allocation system.

2. The computing device of claim 1, wherein:

the resource is a selected type of resource used in the proposed transaction; the proposed transaction comprises a transfer of an amount of the selected type of resource out of one or more of the source accounts; and
the one or more previous transactions are selected from a plurality of previous transactions that are traceable from the one or more source accounts.

3. The computing device of claim 2, wherein:

the proposed transaction comprises a first transaction;
the one or more source accounts comprise one or more first source accounts;
the amount of the selected type of resource comprises a first amount of the selected type of resource to be transferred out of the one or more first source accounts;
the plurality of previous transactions that are traceable from the one or more source accounts comprise a second transaction that transferred a second amount of the selected type of resource out of a second source account; and
the plurality of previous transactions that are traceable from the one or more source accounts further comprise a third transaction that took place before the second transaction, the third transaction transferring a third amount of the selected type of resource into the second source account.

4. The computing device of claim 2, wherein selecting, probabilistically, one or more previous transactions comprises associating, with each of the one or more previous transactions, a respective probability based on an amount of the respective previous transaction relative to a total amount of the one or more previous transactions considered for selection.

5. The computing device of claim 2, wherein a total amount of checking by selection of the one or more previous transactions is based on a resource budget for checking, and the resource budget is determined based on the amount of the selected type of resource to be transferred in the proposed transaction.

6. The computing device of claim 1, wherein

the transaction history comprises a plurality of transaction history replicas of a plurality of accounts;
the at least one processor comprises a plurality of computing nodes which share responsibility for maintaining the plurality of accounts;
the proposed transaction comprises transferring out of at least one source account;
the source account replica nodes constitute one or more computing nodes from the plurality of computing nodes which share responsibility for maintaining the plurality of accounts, which are responsible for maintaining transaction history replicas of the at least one source account;

the source account replica nodes are further programmed to independently select some of the one or more selected previous transactions, and obtain data from source accounts of the one or more selected previous transactions by querying one or more computing nodes responsible for maintaining the source accounts of the one or more selected previous transactions; at least one of the source account replica nodes independently determines whether the one or more previous transactions selected by the computing node are valid; and determining whether the proposed transaction is impaired comprises forming a quorum of source account replica nodes, wherein a joint result of the quorum is used to determine whether the proposed transaction is impaired.

7. The computing device of claim 6, wherein

   the quorum comprises the quorum of source account replica nodes; and
   at least one quorum node is further programmed to memorialize, in a transaction log, a consensus of the quorum with respect to the proposed transaction.

8. The computing device of claim 7, wherein

   the at least one processor additionally comprises a plurality of log nodes; and
   each node in the quorum has at least one associated log node responsible for collecting a log from the computing node in the quorum.

9. The computing device of claim 1, wherein:

   the resource allocation system is maintained by a plurality of nodes; and
   the other one or more source accounts comprise at least one source account associated with a node that, acting as a replica for the first source account, accepted the at least one previous transaction that is determined to be invalid.

10. The computing device of claim 1, wherein:

   the transaction history comprises a plurality of transaction history replicas of a plurality of accounts;
   the at least one processor comprises a plurality of computing nodes which share responsibility for maintaining the plurality of accounts;
   the first source account replica nodes constitute one or more computing nodes from the plurality of computing nodes which share responsibility for maintaining the plurality of accounts, which are responsible for maintaining transaction history replicas of the at least one source account;
the one or more other source accounts comprise second source accounts associated with first source account replica nodes that accepted the at least one previous transaction that is determined to be invalid;
the second amount is divided into a covered amount which is the total amount not more than the second amount supported by balances of the second source accounts, and a residual amount, which is any remainder once the covered amount has been deducted from the second amount;
the second source account replica nodes constitute one or more computing nodes from the plurality of computing nodes which share responsibility for maintaining the plurality of accounts, which are responsible for maintaining transaction history replicas of the second source accounts;
the third source accounts comprise accounts associated with the second source account replica nodes; and
the resource allocation system is further programmed so that the residual amount is apportioned among the third source accounts.

11. The computing device of claim 10, wherein:

   nodes which manage account history replicas comprise first replica nodes;
   the accounts of first replica nodes comprise first replica node accounts;
   the nodes which manage account history replicas of first replica node accounts comprise second replica nodes; and
   the resource allocation system is further programmed so that first replica nodes periodically ask for permission from second replica nodes to process transactions on the accounts whose history the first replica nodes manage.

12. The computing device of claim 1, which is additionally programmed to determine whether any of several proposed transactions are impaired, by following the procedure of the resource allocation system of claim 1, but using information retrieved by this process to determine whether any of the proposed transactions is impaired.

13. The computing device of claim 11, wherein

   the second replica nodes comprise the first level of chained replica nodes;
   the chained replica nodes of level greater than one constitute nodes who are responsible for maintain account replicas of chained replica nodes of the preceding level; and

the system is further programmed so that, up to some level, chained replica nodes of previous levels periodically ask permission from nodes of subsequent levels to grant permission to lower levels.

## Patentansprüche

1. Ein Rechner eines Ressourcenverteilungssystems, wobei der Rechner umfasst:

   mindestens einen Prozessor; und
   mindestens ein nichtflüchtiges, computerlesbares Speichermedium, auf dem Befehle codiert sind, die, wenn sie von dem mindestens einen Prozessor ausgeführt werden, den mindestens einen Prozessor so programmieren, dass er bestimmt, ob eine vorgeschlagene Transaktion durch einen Mangel an Ressourcen beeinträchtigt ist, zumindest teilweise durch:

      eine oder mehrere frühere Transaktionen aus einem im Ressourcenverteilungssystem aufgezeichneten Transaktionsverlauf probabilistisch auswählen oder mit Sicherheit auswählen, wenn der Transaktionsverlauf nur ein Element enthält;
      Bestimmen, ob die ausgewählte eine oder mehreren früheren Transaktionen gültig sind, wobei jede der einen oder mehreren früheren Transaktionen mit einem Transaktionsbetrag der Ressource aus jedem der einen oder mehreren Quellkonten, den einen oder mehreren Quellkonten und den Salden der Quellkonten verbunden ist, und wobei das Bestimmen, ob die ausgewählte eine oder mehreren früheren Transaktionen gültig sind, für die Überprüfung der früheren Transaktion umfasst, für jedes Quellkonto, dass der Saldo des Quellkontos ausreichend war, um eine ausgehende Überweisung des Transaktionsbetrags der Ressource für das Quellkonto zu unterstützen; und
      Feststellen, ob die vorgeschlagene Transaktion beeinträchtigt ist, wobei die vorgeschlagene Transaktion als beeinträchtigt festgestellt wird, wenn festgestellt wird, dass mindestens eine der ausgewählten einen oder mehreren früheren Transaktionen ungültig ist,

   wobei

      wenn festgestellt wird, dass die vorgeschlagene Transaktion nicht beeinträchtigt ist, die vorgeschlagene Transaktion im Ressourcenallokationssystem aufgezeichnet wird, um anzuzeigen, dass die vorgeschlagene Transaktion akzeptiert wurde,
wobei der mindestens eine Prozessor ferner so programmiert ist,
als Reaktion auf die Feststellung, dass mindestens eine der einen oder mehreren früheren Transaktionen ungültig ist, die Transaktionshistorie im Ressourcenallokationssystem zumindest teilweise zu ändern, indem die mindestens eine frühere Transaktion durch eine oder mehrere Ersatztransaktionen ersetzt wird,
wobei die mindestens eine frühere Transaktion, die als ungültig ermittelt wurde, eine Übertragung eines ersten Betrags der ausgewählten Art von Ressource aus einem ersten Quellkonto umfasst, die mindestens eine frühere Transaktion als ungültig ermittelt wird, wenn festgestellt wird, dass der Saldo des ersten Quellkontos um einen zweiten Betrag unzureichend war, um die Übertragung des ersten Betrags zu unterstützen, und
das Ersetzen der mindestens einen früheren Transaktion durch eine oder mehrere Ersatztransaktionen das Reduzieren des ersten Betrags umfasst, der vom ersten Quellkonto überwiesen wurde, um den zweiten Betrag und das Hinzufügen eines oder mehrerer anderer Quellkonten, auf die der zweite Betrag aufgeteilt wird;
die probabilistische Auswahl so ist, dass jede der einen oder mehreren vorherigen Transaktionen mit einer Wahrscheinlichkeit überprüft wird, die mit dem fortgesetzten Betrieb des Ressourcenallokationssystems gegen die Gewissheit konvergiert.

2. Der Rechner nach Anspruch 1, wobei:

   die Ressource ein ausgewählter Ressourcentyp ist, der in der vorgeschlagenen Transaktion verwendet wird;
   die vorgeschlagene Transaktion eine Übertragung eines Betrags des ausgewählten Ressourcentyps aus einem oder mehreren der Quellkonten umfasst; und
   die eine oder mehreren vorherigen Transaktionen aus einer Vielzahl von vorherigen Transaktionen ausgewählt werden, die von dem einen oder den mehreren Quellkonten zurückverfolgt werden können.

3. Der Rechner nach Anspruch 2, wobei:

   die vorgeschlagene Transaktion eine erste Transaktion umfasst;
   das eine oder die mehreren Quellkonten ein oder mehrere erste Quellkonten umfassen;
   der Betrag der ausgewählten Art von Ressource einen ersten Betrag der ausgewählten Art von Ressource umfasst, der aus dem einen oder den mehreren ersten Quellkonten übertragen werden soll;

die Vielzahl von früheren Transaktionen, die von dem einen oder den mehreren Quellkonten zurückverfolgt werden können, eine zweite Transaktion umfasst, bei der ein zweiter Betrag der ausgewählten Art von Ressource aus einem zweiten Quellkonto übertragen wurde; und

die Vielzahl von früheren Transaktionen, die von dem einen oder den mehreren Quellkonten zurückverfolgt werden können, ferner eine dritte Transaktion umfasst, die vor der zweiten Transaktion stattfand, wobei bei der dritten Transaktion ein dritter Betrag der ausgewählten Art von Ressource auf das zweite Quellkonto übertragen wurde.

4. Der Rechner nach Anspruch 2, wobei das probabilistische Auswählen einer oder mehrerer vorheriger Transaktionen das Zuordnen einer jeweiligen Wahrscheinlichkeit zu jeder der einen oder mehreren vorherigen Transaktionen umfasst, basierend auf einem Betrag der jeweiligen vorherigen Transaktion im Verhältnis zu einem Gesamtbetrag der einen oder mehreren vorherigen Transaktionen, die für die Auswahl in Betracht gezogen werden.

5. Der Rechner nach Anspruch 2, wobei ein Gesamtbetrag der Überprüfung durch Auswahl der einen oder mehreren früheren Transaktionen auf einem Ressourcenbudget für die Überprüfung basiert und das Ressourcenbudget auf der Grundlage des Betrags der ausgewählten Art von Ressource bestimmt wird, die in der vorgeschlagenen Transaktion übertragen werden soll.

6. Der Rechner nach Anspruch 1, wobei

die Transaktionshistorie eine Vielzahl von Transaktionshistorie-Replikaten einer Vielzahl von Konten umfasst;

der mindestens eine Prozessor eine Vielzahl von Rechenknoten umfasst, die sich die Verantwortung für die Verwaltung der Vielzahl von Konten teilen;

die vorgeschlagene Transaktion eine Überweisung von mindestens einem Quellkonto umfasst;

die Quellkonten-Replikationsknoten einen oder mehrere Rechenknoten aus der Vielzahl von Rechenknoten bilden, die gemeinsam für die Verwaltung der Vielzahl von Konten verantwortlich sind und die für die Verwaltung der Transaktionsverlaufsreplikate des mindestens einen Quellkontos verantwortlich sind;

die Quellkonten-Replikationsknoten sind ferner so programmiert, dass sie unabhängig voneinander einige der einen oder mehreren ausgewählten früheren Transaktionen auswählen und Daten aus den Quellkonten der einen oder mehreren ausgewählten früheren Transaktionen abrufen, indem sie einen oder mehrere Rechenknoten abfragen, die für die Verwaltung der Quellkonten der einen oder mehreren ausgewählten früheren Transaktionen verantwortlich sind;

mindestens einer der Quellkonten-Replikationsknoten unabhängig bestimmt, ob die eine oder mehreren früheren Transaktionen, die vom Rechenknoten ausgewählt wurden, gültig sind; und

Bestimmen, ob die vorgeschlagene Transaktion beeinträchtigt ist, umfasst das Bilden eines Quorums von Quellkonten-Replikationsknoten, wobei ein gemeinsames Ergebnis des Quorums verwendet wird, um zu bestimmen, ob die vorgeschlagene Transaktion beeinträchtigt ist.

7. Der Rechner nach Anspruch 6, wobei

das Quorum das Quorum der Quellkonto-Replikationsknoten umfasst; und

mindestens ein Quorumknoten ferner so programmiert ist, dass er in einem Transaktionsprotokoll einen Konsens des Quorums in Bezug auf die vorgeschlagene Transaktion festhält.

8. Der Rechner nach Anspruch 7, wobei

der mindestens eine Prozessor zusätzlich eine Vielzahl von Protokollknoten umfasst; und

jeder Knoten im Quorum mindestens einen zugehörigen Protokollknoten aufweist, der für das Sammeln eines Protokolls vom Rechenknoten im Quorum verantwortlich ist.

9. Der Rechner nach Anspruch 1, wobei

das Ressourcenzuweisungssystem von einer Vielzahl von Knoten verwaltet wird; und

das andere eine oder mehrere Quellkonten mindestens ein Quellkonto umfassen, das einem Knoten zugeordnet ist, der als Replik für das erste Quellkonto fungiert und die mindestens eine vorherige Transaktion akzeptiert hat, die als ungültig ermittelt wurde.

10. Der Rechner nach Anspruch 1, wobei:

die Transaktionshistorie eine Vielzahl von Transaktionshistorie-Replikaten einer Vielzahl von Konten umfasst;

der mindestens eine Prozessor eine Vielzahl von Rechenknoten umfasst, die gemeinsam für die Verwaltung der Vielzahl von Konten verantwortlich sind;

die ersten Quellkonten-Replikationsknoten einen oder mehrere Rechenknoten aus der Vielzahl von Rechenknoten bilden, die gemeinsam für die Verwaltung der Vielzahl von Konten verantwortlich sind und für die Verwaltung der Transaktionsverlaufsreplikationen des mindestens einen Quellkontos verantwortlich sind;

das eine oder die mehreren anderen Quellkonten zweite Quellkonten umfassen, die mit ersten Quellkonten-Replikatknoten verbunden sind, die die mindestens eine vorherige Transaktion akzeptiert haben, die als ungültig ermittelt wurde;

der zweite Betrag in einen gedeckten Betrag, der dem Gesamtbetrag entspricht, der nicht höher ist als der zweite Betrag, der durch die Guthaben der zweiten Quellkonten gedeckt ist, und einen Restbetrag, der dem Restbetrag entspricht, der nach Abzug des gedeckten Betrags vom zweiten Betrag verbleibt, unterteilt wird;

die Replikationsknoten des zweiten Quellkontos einen oder mehrere Rechenknoten aus der Vielzahl von Rechenknoten bilden, die gemeinsam für die Verwaltung der Vielzahl von Konten verantwortlich sind, die für die Verwaltung von Transaktionsverlaufsreplikaten der zweiten Quellkonten zuständig sind;

die dritten Quellkonten Konten umfassen, die mit den Replikationsknoten des zweiten Quellkontos verbunden sind; und

das Ressourcenzuweisungssystem ferner so programmiert ist, dass der Restbetrag auf die dritten Quellkonten aufgeteilt wird.

11. Der Rechner nach Anspruch 10, wobei:

Knoten, die Kontoreplikate verwalten, erste Replikatknoten umfassen;

die Konten der ersten Replikationsknoten erste Replikationsknotenkonten umfassen;

die Knoten, die Replikate der Kontohistorie von Replikatknotenkonten verwalten, zweite Replikatknoten umfassen; und

das Ressourcenzuweisungssystem ferner so programmiert ist, dass erste Replikationsknoten regelmäßig die Erlaubnis von zweiten Replikationsknoten einholen, um Transaktionen auf den Konten zu verarbeiten, deren Verlauf die ersten Replikationsknoten verwalten.

12. Der Rechner nach Anspruch 1, das zusätzlich so programmiert ist, dass es feststellt, ob eine von mehreren vorgeschlagenen Transaktionen beeinträchtigt ist, indem es das Verfahren des Ressourcenverteilungssystems nach Anspruch 1 befolgt, jedoch Informationen verwendet, die durch diesen Prozess abgerufen wurden, um festzustellen, ob eine der vorgeschlagenen Transaktionen beeinträchtigt ist.

13. Der Rechner nach Anspruch 11, wobei

die Replikationsknoten des zweiten Quellkontos die erste Ebene der verketteten Replikationsknoten bilden;

die verketteten Replikationsknoten der Ebene größer als eins Knoten bilden, die für die Pflege von Kontoreplikaten der verketteten Replikationsknoten der vorhergehenden Ebene verantwortlich sind; und

das System ferner so programmiert ist, dass verkettete Replikationsknoten vorheriger Ebenen bis zu einer bestimmten Ebene regelmäßig die Erlaubnis von Knoten nachfolgender Ebenen einholen, um niedrigeren Ebenen die Erlaubnis zu erteilen.

## Revendications

1. Dispositif informatique d'un système d'allocation de ressources, le dispositif informatique comprenant :

au moins un processeur ; et
au moins un support de stockage non transitoire, lisible par ordinateur, sur lequel sont codées des commandes qui, lorsqu'elles sont exécutées par au moins un processeur, programment l'au moins un processeur de manière à ce qu'il détermine si une transaction proposée est compromise par un manque de ressource, au moins en partie en :

sélectionnant, de manière probabiliste, une ou plusieurs transactions précédentes dans un historique des transactions enregistré au sein du système d'allocation de ressources ou en sélectionnant avec certitude si l'historique des transactions ne contient qu'un seul élément ;
déterminant si la ou les transaction(s) précédente(s) sélectionnée(s) est (sont) valide(s), dans lequel chacune de la transaction ou des transaction(s) précédente(s) y a associé un montant de transaction de la ressource de chacun d'un ou des compte(s) source(s), et des soldes des comptes sources, et le fait de décider si la ou les transaction(s) précédente(s) est (sont) valide(s) comporte pour lesdites transactions précédentes la vérification, pour chaque compte source, que le solde du compte source était suffisant pour soutenir un transfert partant du montant de transaction de la ressource pour ledit compte source ; et

en déterminant si la transaction proposée est compromise, dans lequel la transaction proposée est qualifiée d'être compromise s'il y a détermination qu'une de l'une ou des transaction(s) précédente(s) n'est (ne sont) pas valide(s), dans lequel,

s'il y a constatation que la transaction proposée n'est pas compromise, la transaction proposée est enregistrée au sein du système d'allocation des ressources pour signaler que la transaction proposée a été acceptée,

dans lequel l'au moins un processeur est par ailleurs programmé pour :

en réponse au fait qu'au moins une transaction précédente parmi la ou les transaction(s) précédente(s) a été qualifiée comme étant invalide, modifier l'historique des transactions dans le système d'allocation des ressources au moins en partie en remplaçant l'au moins une transaction précédente par une ou plusieurs transaction(s) de substitution,

dans lequel l'au moins une transaction précédente qualifiée comme étant invalide comprend un transfert d'un premier montant du type de ressource sélectionné à partir d'un premier compte source, l'au moins une transaction précédente est qualifiée comme étant invalide en réponse à la constatation qu'un solde du premier compte source a été insuffisant par un deuxième montant pour soutenir le transfert du premier montant, et

le remplacement de l'au moins une transaction précédente par une ou plusieurs transactions de substitution comprend la diminution du premier montant transféré depuis le premier compte source par le deuxième montant, et l'addition d'un ou de plusieurs autres comptes sources parmi lesquels le deuxième montant est réparti ;

la sélection probabiliste est telle que chacune de l'une ou des transaction(s) précédente(s) est vérifiée avec une probabilité qui converge vers la certitude avec l'opération continue du système d'allocation des ressources.

2. Dispositif informatique selon la revendication 1, dans lequel :

la ressource est un type de ressource sélectionné qui est utilisé dans la transaction proposée ; la transaction proposée comporte un transfert d'un montant du type de ressource sélectionné depuis un ou plusieurs des comptes sources ; et

l'une ou les transaction(s) précédente(s) est (sont) sélectionnée(s) d'une pluralité de transactions précédentes traçables de l'un ou des compte(s) source(s).

3. Dispositif informatique selon la revendication 2, dans lequel :

la transaction proposée comporte une première transaction ;

le ou les compte(s) source(s) comprend (comprennent) un ou plusieurs premier(s) compte(s) source(s) ;

le montant du type de ressource sélectionné comporte un premier montant du type de ressource sélectionné à transférer parmi le ou les premier(s) compte(s) source(s) ;

la pluralité des transactions précédentes traçables du ou des compte(s) source(s) comporte une deuxième transaction qui a transféré un deuxième montant du type de ressource sélectionné depuis un deuxième compte source ; et

la pluralité des transactions précédentes traçables depuis le ou les compte(s) source(s) comprend par ailleurs une troisième transaction ayant précédé la deuxième transaction, la troisième transaction transférant un troisième montant du type de ressource sélectionné vers le deuxième compte source.

4. Dispositif informatique selon la revendication 2, dans lequel la sélection probabiliste d'une ou de plusieurs transactions précédentes comprend l'association, à chacune de l'une ou des transaction(s) précédente(s), d'une probabilité respective sur la base d'un montant de la transaction précédente correspondante par rapport à un montant total de l'une ou des transaction(s) précédente(s) prise(s) en compte pour la sélection.

5. Dispositif informatique selon la revendication 2, dans lequel un montant total de la vérification par sélection de l'une ou des transaction(s) précédente(s) est basé sur un budget de ressources pour la vérification, et le budget de ressources est déterminé en fonction du montant du type de ressource sélectionné à transférer dans la transaction proposée.

6. Dispositif informatique selon la revendication 1, dans lequel

l'historique des transactions comporte une pluralité de répliques d'historiques de transactions d'une pluralité de comptes ;

l'au moins un processeur comporte une pluralité de nœuds informatiques qui partagent la responsabilité pour le maintien de la pluralité de comptes ;

la transaction proposée comprend le transfert depuis au moins un compte source ;

les nœuds de réplication des comptes sources constituent un ou plusieurs nœuds informatiques de la pluralité de nœuds informatiques qui partagent la responsabilité de maintien de la pluralité de comptes, lesquels sont responsables du maintien des répliques d'historiques de transactions de l'au moins un compte source ;

les nœuds de réplication du compte source sont par ailleurs programmés de manière à sélectionner indépendamment certaines de l'une ou des transaction(s) précédente(s) sélectionnée(s), et à récupérer des données de comptes sources de l'une ou des transaction(s) précédente(s) sélectionnée(s) en demandant qu'un ou plusieurs nœud(s) informatiques responsables du maintien des comptes sources de l'une ou des transaction(s) précédente(s) sélectionnée(s) ;

au moins l'un des nœuds de réplication du compte source détermine indépendamment si la ou les transaction(s) précédente(s) sélectionnée(s) par le nœud informatique est (sont) valide(s) ; et

déterminer si le fait que la transaction proposée est compromise entraîne la constitution d'un quorum de nœuds de réplication du compte source, dans lequel un résultat commun du quorum est utilisé pour déterminer si la transaction proposée est compromise.

7. Dispositif informatique selon la revendication 6, dans lequel

le quorum comprend le quorum des nœuds de réplication du compte source ; et

au moins un nœud du quorum est par ailleurs programmé pour stocker dans un journal des transactions un consensus du quorum relatif à la transaction proposée.

8. Dispositif informatique selon la revendication 7, dans lequel

l'au moins un processeur comprend en outre une pluralité de nœuds de journalisation ; et chaque nœud du quorum a au moins un nœud de journalisation associé chargé de collecter un journal à partir du nœud informatique du quorum.

9. Dispositif informatique selon la revendication 1, dans lequel :

le système d'allocation des ressources est maintenu par une pluralité de nœuds ; et

l'autre au moins un ou plusieurs comptes sources comprend/comprennent au moins un compte source associé à un nœud qui, servant de réplique pour le premier compte source, a accepté l'au moins une transaction précédente qualifiée comme étant invalide.

10. Dispositif informatique selon la revendication 1, dans lequel :

l'historique des transactions comporte une pluralité de répliques d'historiques de transactions d'une pluralité de comptes ;

l'au moins un processeur comporte une pluralité de nœuds informatiques qui partagent la responsabilité pour le maintien de la pluralité de comptes ;

les premiers nœuds de réplication des comptes sources constituent un ou plusieurs nœuds informatiques de la pluralité de nœuds informatiques qui partagent la responsabilité de maintien de la pluralité de comptes, lesquels sont responsables du maintien des répliques d'historiques des transactions de l'au moins un compte source ;

l'au moins un ou plusieurs autres comptes sources comprend/comprennent des deuxièmes comptes sources associés à des premiers nœuds de réplication des comptes sources qui ont accepté l'au moins une transaction précédente qualifiée comme étant invalide ;

le deuxième montant est divisé en un montant couvert constituant le montant total ne dépassant pas le deuxième montant soutenu par les soldes des deuxièmes comptes sources, et un montant résiduel qui constitue le reste une fois que le montant couvert a été déduit du deuxième montant ;

les nœuds de réplication des deuxièmes comptes sources constituent un ou plusieurs nœuds informatiques de la pluralité de nœuds informatiques qui partagent la responsabilité de maintien de la pluralité de comptes, lesquels sont responsables du maintien des répliques d'historiques des transactions des deuxièmes comptes sources ;

les troisièmes comptes sources comprennent des comptes associés aux nœuds de réplication du deuxième compte source ; et

le système d'allocation des ressources est par ailleurs programmé pour répartir le montant résiduel entre les troisièmes comptes sources.

11. Dispositif informatique selon la revendication 10, dans lequel :

les nœuds qui gèrent les répliques de l'historique des comptes comprennent les premiers nœuds de réplication ;

les comptes des premiers nœuds de réplication comprennent les premiers comptes de nœuds de réplication ;

les nœuds qui gèrent les répliques de l'historique des premiers comptes de nœuds de réplication comprennent les deuxièmes nœuds de réplication ; et

le système d'allocation des ressources est en outre programmé pour que les premiers nœuds de réplication demandent périodiquement l'autorisation aux deuxièmes nœuds de réplication pour traiter les transactions sur les comptes dont les premiers nœuds de réplication gèrent l'historique.

12. Dispositif informatique selon la revendication 1, qui est en outre programmé pour déterminer si une ou plusieurs transaction(s) proposée(s) est (sont) compromise(s), en suivant la procédure du système d'allocation des ressources de la revendication 1, mais en utilisant les données récupérées par ce processus pour déterminer si l'une des transactions proposées est compromise.

13. Dispositif informatique selon la revendication 11, dans lequel

les deuxièmes nœuds de réplication comportent le premier niveau de nœuds de réplication en chaîne ;

les nœuds de réplication en chaîne d'un niveau supérieur à un constituent des nœuds responsables pour maintenir les répliques de compte de nœuds de réplication en chaîne du niveau précédent ; et

le système est par ailleurs programmé de telle sorte que, jusqu'à un certain niveau, les nœuds de réplication en chaîne des niveaux précédents demandent périodiquement l'autorisation aux nœuds des niveaux suivants d'accorder l'autorisation aux niveaux inférieurs.

FIG. 1

FIG. 2

FIG. 3

FIG. 4

FIG. 5

600

Node 610

Processor 611

Memory 612

User I/O 615

Network Interface 613

Terminal 669

Terminal 661

Terminal 660

Network 650

Node 620

Node 621

Node 622

Node 629

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018341930 A1
- US 2018101848 A1
- US 6463532 B1
- US 2017031037 W
- US 20130290249 A1
- US 20180341930 A1
- WO 2019032891 A1
- US 20170264428 A1
- US 10135609 B2

**Non-patent literature cited in the description**

- **AWERBUCH** ; **BARUCH** ; **CHRISTIAN SCHEIDE-LER**. Towards Scalable and Robust Overlay Networks. *IPTPS*, 2007, vol. 7, http://citeseerx.ist.psu.edu/viewdoc/download?doi=10.1.1.176.6088&rep=rep1&type=pdf
- **BAILIS, PETER** ; **ALI GHODSI**. Eventual consistency today: Limitations, extensions, and beyond.. *Queue*, 2013, vol. 11 (3), 20, http://www.bailis.org/papers/eventual-queue2013.pdf
- **FELDMAN** ; **CHUANG**. Overcoming Free-Riding Behavior in Peer-to-Peer Systems. *ACM sigecom exchanges*, 2005, vol. 5 (4), 41-50, http://www.sigecom.org/exchanges/volume_5_(04)/5.4-feldman.pdf
- Making chord robust to byzantine attacks.. **FIAT, AMOS** ; **JARED SAIA** ; **MAXWELL YOUNG**. European Symposium on Algorithms. Springer, 2005
- Distributed key generation for the internet. **KATE** ; **GOLDBERG, KATE, ANIKET** ; **IAN GOLDBERG**. 2009 29th IEEE International Conference on Distributed Computing Systems. IEEE, 2009
- **KELLERER, HANS** ; **ULRICH PFERSCHY**. A new fully polynomial time approximation scheme for the knapsack problem. *Journal of Combinatorial Optimization*, 1999, vol. 3 (1), 59-71
- Byzantizing Paxos by refinement. **LAMPORT, LESLIE**. International Symposium on Distributed Computing. Springer, 2011
- **LAMPORT, LESLIE** ; **ROBERT SHOSTAK** ; **MARSHALL PEASE**. The Byzantine generals problem.. *ACM Transactions on Programming Languages and Systems (TOPLAS)*, 1982, vol. 4 (3), 382-401
- **LUA, ENG KEONG et al.** A survey and comparison of peer-to-peer overlay network schemes.. *IEEE Communications Surveys and tutorials*, 2005, vol. 7 (1-4), 72-93, https://ieeexplore.ieee.org/abstract/document/1610546
- **YOUNG et al.** *Towards Practical Communication in Byzantine-Resistant DHTs*, http://www.cypherpunks.ca/~iang/pubs/ByzantineDHT_Journal.pdf